(19) Europäisches Patentamt
European Patent Office
Office européen des brevets

(11) EP 0 527 108 B1

(12) EUROPÄISCHE PATENTSCHRIFT

(45) Veröffentlichungstag und Bekanntmachung des Hinweises auf die Patenterteilung:
**21.08.1996 Patentblatt 1996/34**

(51) Int Cl.$^6$: **G01J 3/46**, B41M 1/14

(21) Anmeldenummer: **92810581.6**

(22) Anmeldetag: **29.07.1992**

# (54) Mehrfarbendruck und Herstellung einer Farbmittelmischung

Multicolour printing and production of a colorant mixture

Impression en plusieurs couleurs et production d'un mélange de colorants

(84) Benannte Vertragsstaaten:
**BE CH DE ES FR GB IT LI NL**

(30) Priorität: **07.08.1991 CH 2335/91**

(43) Veröffentlichungstag der Anmeldung:
**10.02.1993 Patentblatt 1993/06**

(73) Patentinhaber: **CIBA-GEIGY AG**
**4002 Basel (CH)**

(72) Erfinder:
- **Hermann, Hanspeter**
  **W-7850 Lörrach-Hauingen (DE)**
- **Défago, Raymond**
  **CH-4125 Riehen (CH)**
- **Franceschini, Peter**
  **CH-2812 Movelier (CH)**
- **Forster, Peter**
  **CH-4054 Basel (CH)**

(56) Entgegenhaltungen:
**EP-A- 0 360 738**
**EP-A- 0 446 168**
**WO-A-89/09383**
**GB-A- 2 192 455**
**US-A- 5 023 814**

- **PATENT ABSTRACTS OF JAPAN vol. 11, no. 370 (P-642) 3. Dezember 1987 & JP-A-62 142 242**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 527 108 B1

Printed by Jouve, 75001 PARIS (FR)

## Beschreibung

Die Erfindung betrifft ein Verfahren zur Steuerung einer Mehrfarbendruckvorrichtung, eine Anlage zur Herstellung einer Farbmittelmischung und eine Mehrfarbendruckvorrichtung gemäss dem Oberbegriff von Patentanspruch 1 bzw. Patentanspruch 7 bzw. Patentanspruch 8.

Jeder Industriebereich, der sich mit der Farbgebung beschäftigt, hat vorlagengetreue Nachstellungen von Farbtönen durchzuführen oder neue Farb- und Formzusammenstellungen zu entwerfen. In den letzten Jahren hat sich dieser Industriebereich durch die möglich gewordene Verknüpfung von Design, farbiger Computergraphik, Farbmetrik und Computerstationen sehr stark entwickelt.

Es ist heute möglich, eine Farb- und Formvorlage z.B. mittels eines Scanners oder einer Videokamera auf einem Bildschirm darzustellen und wunschgemäss bezüglich Form- und Farbgebung zu variieren sowie dieses Design mittels eines Farbdruckers, z.B. eines Ink-Jet-Druckers, auf jedem beliebigen Substrat auszudrucken. Die Nachstellung der Vorlage bereitet aber immer noch Schwierigkeiten, da die gesuchten Farbtöne z. B. aus einem umfangreichen Farbatlas ausgewählt werden müssen; bekannt sind Sammlungen von bis zu 15000 verschiedenen Farbtönen, sowie computerunterstützte Systeme, die eine sehr grosse Zahl von Farbtönen speichern und mit Hilfe eines Bildschirmes visualisieren oder auch mittels eines Farbdruckers auf einem beliebigen Substrat ausdrucken können. Die Farbatlanten traditioneller Art und elektronischer Art liefern für jede Farbstoffklasse die Rezepturen, die von Substrat zu Substrat verschieden sein können.

Die Herstellung solcher Farbatlanten benötigt einen grossen Aufwand. Die Farbatlanten sind natürlich nur so lange gültig, wie sich die Grundfarbstoffe, die Applikationsverfahren und die Substrate nicht ändern. Jede Aenderung bedingt eine zumindest teilweise oder gar vollständige Erneuerung der Farbatlanten. Diese Verfahrensweise ist daher äusserst unökonomisch.

Bekannt sind ferner farbmetrische Rezeptierungen mittels der Spektrophotometrie. Auch diese Rezeptierung zeigt Mängel bei der Nachstellung, da die bekannten Programme zu wenig selektiv sind und in der Regel eine Vielzahl von Rezepten erstellen, so dass Spezialisten notwendig sind, um aus diesen Vorschlägen die "richtigen" Rezepte auszuwählen. Mit diesen ausgewählten Rezepten wird dann jeweils eine Probefärbung hergestellt, und anschliessend entsprechend der Erfahrung des Spezialisten einmal oder auch mehrfach korrigiert.

Alle heute in der Praxis bestehenden und bekannten farbmetrischen Systeme zur Nachstellung einer Vorlage verwenden Reflexionskurven der Vorlage, und es wird versucht, durch Mischen bekannter Farbstoffe die Reflexionskurven der Vorlage anzunähern.

Weil die Reflexionsdaten von den Farbstoffen abhängen und man in der Regel nicht die in der Vorlage verwendeten Farbstoffe einsetzen kann, wird die Nachstellung im allgemeinen eine Reflexionskurve aufweisen, die mehr oder weniger von der Vorlage abweicht. Um die Abweichung möglichst gering zu halten, werden Mischungen verschiedener Farbstoffe verwendet, um Unterschiede der Reflexionskurven auszugleichen. Diese Vorgehensweise ist zeitraubend und bedingt grosse Erfahrung mit den verwendeten Farbstoffen.

Mit dem erfindungsgemässen Verfahren und der entsprechenden erfindungsgemässen Anlage werden die genannten Mängel der bekannten Systeme beseitigt.

Das erfindungsgemässe Verfahren und die erfindungsgemässe Anlage sind durch die Merkmale des Patentanspruchs 1 bzw. 7 gekennzeichnet. Bevorzugte Ausgestaltungen des Verfahrens sind Gegenstand der abhängigen Ansprüche 2-6.

Das erfindungsgemässe Verfahren und die erfindungsgemässe Anlage machen von einem Rezepturbestimmungsverfahren Gebrauch, welches in der prioritätsälteren EP-A-0 446 168 (veröffentlicht 11.09.91) in etwas anderem Zusammenhang beschrieben ist.

Das erfindungsgemässe Verfahren zeichnet sich dadurch aus, dass jede Vorlage praktisch beliebig exakt nachgestellt werden kann, weil nicht die beste Annäherung an die Reflexionskurve der Vorlage gesucht wird, sondern die Farbe der Vorlage im Farbraum exakt definiert wird und exakt dieser Farbort im Farbraum zur Rezeptierung aufgesucht wird.

Das erfindungsgemässe Verfahren beruht auf dem bekannten CIEL*a*b*-Farbkoordinatensystem, wobei aber die HelligkeitsachseL* durch die Farbtiefen-Kenngrösse FT ersetzt wird. Der Vorteil dieser Vorgehensweise ist, dass Farborte gleicher Farbtiefe oder gleicher Farbstärke auf einer Ebene des Farbraumes liegen.

Als Farbtiefen-Kenngrösse FT kommt z.B. die Richttyptiefe in Betracht, wobei die Richttyptiefe nicht nur in den bekannten 2/1, 1/1, 1/3, 1/6, 1/12 und 1/25 Tiefen angegeben wird, sondern noch weiter unterteilt werden kann, z.B. in Schritten von 1/10 Richttyptiefe oder kleiner. Ferner können als Farbtiefen-Kenngrösse Werte aus Reflexionsmessungen verwendet werden, welche nach Angaben in "Textilveredlung", 1986, Seiten299 bis304 erhältlich sind. Weitere Farbtiefe-Kenngrössen sind z.B. in W.Schultze, "Farbenlehre und Farbmessung", 3.Auflage, Springer-Verlag, Seiten76-84 und in Schönpflug, "Die Anwendung von Küpenfarbstoffen zum Färben von Polyamidfasern", Melliand, 38-2/1957, Seiten 173-177 beschrieben. Die vorstehend angeführten und die im foldenden noch zitierten Druckschriften dienen lediglich zu Offenbarungszwecken als Referenz für den Fachmann, sind aber in Bezug auf die vorliegende

Erfindung unerheblich.

Ein Vorteil der Aufteilung des Farbraumes in Ebenen verschiedener Farbtiefe, wobei alle Farbtöne auf einer Ebene die gleiche Farbtiefe aufweisen, ist, dass bei der Festlegung oder Feststellung der Farbtiefe oder Farbstärke der nachzustellenden Vorlage die entsprechende Farbtiefenebene der zu verwendenden Farbstoffe bekannt ist und sich die gewünschte Farbart, a*- und b*-Daten, entweder aus einem einzigen Farbstoff, einer Zweier-Mischung oder einer Dreier-Mischung ermitteln lässt. Da durch die bekannte Farbtiefenebene auch die Einsatzkonzentration jedes Farbstoffes für diese Farbtiefenebene feststeht, ist das Verhältnis von Mischungen der Farbstoffe durch relativ einfache Rechenverfahren zu ermitteln. Geeignete Rechenverfahren sind z.B. rein rechnerische oder geometrische, insbesondere computergesteuerte, Annäherungsverfahren.

Die Farbartkoordinaten a* und b* entsprechen denjenigen des bekannten CIEL*a*b*-Farbkoordinatensystems. Farborte unterschiedlicher Farbtiefe oder Farbstärke liegen im genannten FTa*b*-Farbraum auf verschiedenen Ebenen übereinander. Bei der Verwendung einer Farbtiefen-Kenngrösse aus Reflexionsmessungen hat sich eine zusätzliche Wichtung der Daten über die Farbempfindung des Auges bzw. über den Farbeindruck als günstig erwiesen.

Im folgenden wird die Erfindung anhand der Zeichnungen näher erläutert. Es zeigen:

Fig.1 eine beispielsweise ausgewählte Farbtiefen-Ebene mit eingetragener Segmentierung in Dreiecksflächen,
Fig.2 ein ausgewähltes Segment aus Fig.1,
Fig.3 das Segment der Fig.2 mit eingetragener Strukturierung,
Fig.4 den durch die Koordinatenachsen FT, a* und b* definierten Farbraum,
Fig.5 ein Flussdiagramm des Rezepturberechnungsverfahrens,
Fig.6 ein Blockschema einer Rezepturberechnungsvorrichtung,
Fig.7 ein Blockschema einer erfindungsgemässen Anlage zur Herstellung einer Farbmittelmischung und
Fig.8 ein Blockschema einer nach dem erfindungsgemässen Verfahren gesteuerten Mehrfarbendruckvorrichtung.

Grundlage der vorliegenden Erfindung ist der in Fig.4 schematisch dargestellte Farbraum, der durch die Koordinatenachsen a*, b* und FT definiert ist. Die Koordinatenachsen a* und b* entsprechen dabei exakt den Chromatitäts- oder Farbart-Koordinaten a* und b* des L*,a*,b*-Farbraums nach CIE. Anstelle der Luminanz-KoordinateL* beim L*, a*,b*-Farbraum tritt aber hier als dritte Koordinatenachse die Farbtiefe FT, wobei es sich zum Beispiel um die sogenannte Richttyptiefe oder um eine andere Farbtiefe-Kenngrösse handeln kann, wie sie z.B. in "Textilveredelung"1986, Seiten299-304 beschrieben ist. Die Farbtiefe FT, welche unabhängig von der Farbart Orte gleicher Farbtiefe definiert, kann dabei visuell erfasst oder aus Remissionsspektren berechnet werden.

Jeder Farbort P im Farbraum ist durch seine drei Koordinaten FT, a* und b* eindeutig definiert. Farborte gleicher Farbtiefe liegen in einer gemeinsamen Farbtiefe-Ebene FT=constant.

Fig.1 zeigt eine solche Farbtiefe-Ebene, beispielsweise etwa 2/3 Richttyptiefe, mit acht eingetragenen FarbortenP1-P8, welche jeweils reinen, d.h. ungemischten Standardfarben (Standard-Farbmitteln, Standard-Farbtinten) Gelb(P1), Goldgelb(P2), Orange(P3), Rot(P4), Rotblau(P5), Blau(P6), Türkis(P7) und Schwarz(P8) entsprechen. Die FarborteP1-P8, d.h. die Farbart-Koordinaten a* und b* der Punkte P1-P8, ergeben sich aus einer Farbmessung nach CIE aus Probefärbungen (körperlichen Farbmustern) der betreffenden Farbtiefe, hier also z.B. 2/3 Richttyptiefe. Die Farborte der ungemischten (reinen) Standardfarben werden im folgenden als Eich-Farborte bezeichnet.

Für eine Färbung eines bestimmten Substrats mit einer vorgegebenen Farbtiefe ist für jede Standard-Farbe eine charakteristische Farbstoffkonzentration erforderlich. Diese hängt neben der angestrebten Farbtiefe unter anderem vom Farbstoff selbst, vom Applikationsverfahren und vom Substrat ab. Der Zusammenhang zwischen Konzentration und Farbtiefe ist in der Regel für jede handelsübliche Standard-Farbe bekannt (z.B. Richttyptiefen-Tafel) oder kann leicht anhand von Probefärbungen ermittelt werden. Für das Verständnis der vorliegenden Erfindung ist die Tatsache wesentlich, dass sich die Farbtiefe einer Färbung mit einer Mischung aus Standardfarben unabhängig vom Mischungsverhältnis nicht ändert, wenn die beteiligten Standardfarben in den für die betreffende Farbtiefe erforderlichen und mit dem Mischungsverhältnis gewichteten Konzentrationen eingesetzt werden. Sind also z.B. für die drei Farben P1, P6 und P7 für eine bestimmte Farbtiefe jeweils die Konzentrationen $C_1$, $C_6$ und $C_7$ erforderlich, so ergibt jede beliebige Mischung dieser drei Standardfarben mit dem Mischungsverhältnis $X_1$, $X_6$ und $X_7$ ($X_1+X_6+X_7=1$) eine Färbung der betreffenden Farbtiefe, wenn die Farbstoffkonzentrationen zu $X_1.C_1$, $X_6.C_6$ und $X_7.C_7$ festgelegt werden. Diese Erfahrungstatsache erlaubt es, das an sich dreidimensionale Problem der Farbnachstellung auf ein zweidimensionales zu reduzieren, indem die nachzustellende Farbtiefe vorgegeben wird und alle weiteren Berechnungen nur noch in der betreffenden Farbtiefenebene erfolgen.

Wie sich aus der weiteren Beschreibung der Erfindung noch ergeben wird, müssen die Eich-Farborte, d.h. die a*- und b*-Koordinaten der für die Nachstellung zur Verfügung stehenden Standardfarben in der jeweils interessierenden Farbtiefenebene, d.h. die Farbtiefe der nachzustellenden Farbe, bekannt sein. Die nachzustellende Farbe wird im folgenden als Sollfarbe, ihr Farbort als Soll-Farbort, ihre Farbkoordinaten als Soll-Farbtiefe-Koordinate und Soll-Farbartkoordinaten bezeichnet.

Die Bestimmung der Eich-Farborte kann auf verschiedene Weise erfolgen. Eine naheliegende Methode besteht darin, dass mit jeder Standardfarbe Probefärbungen verschiedener fein abgestufter Farbtiefen gemacht und die zugehörigen Farbartkoordinaten a* und b* gemessen werden. Vorteilhaft wird aber wie folgt vorgegangen:

Mit jeder Standardfarbe werden Probefärbungen mit unterschiedlichen Farbstoffkonzentrationen gemacht und von jeder Probefärbung wird das Remissionsspektrum aufgenommen und gespeichert. Aus den Remissionsspektren werden für jede Probefärbung die Farbartkoordinaten a* und b* nach CIE sowie die Farbtiefe, z.B. wie in "Textilveredelung"1986, Seiten299-304 oder in W.Schultze "Farbenlehre und Farbmessung", Seiten76-84, 3.Auflage, SpringerVerlag oder in Schönpflug "Die Anwendung von Küpenfarbstoffen zum Färben von Polyamidfasern", Melliand-38-2/1957, Seiten173-177 beschrieben, berechnet. Alternativ können die Farbtiefen auch durch visuelle Beurteilung ermittelt werden bzw. können die Probefärbungen mit vorgegebenen Farbtiefenabstufungen erfolgen.

Nach diesen Messungen liegen für jede Standardfarbe die funktionellen Zusammenhänge zwischen der Farbtiefe-Koordinate FT bzw. den Farbart-Koordinaten a* und b* und den jeweiligen Farbstoffkonzentrationenc in tabellarischer Form (diskrete Einzelpunkte) vor:

$$FT_i=f_i(c) \qquad a^*_i=g_i(c) \qquad b^*_i=h_i(c)$$

Der Index i bezeichnet die einzelnen Standardfarben, die Funktionen f, g und h symbolisieren die funktionellen Zusammenhänge mit den Konzentrationenc.

Zur Ermittlung des Eich-Farborts einer Standardfarbe i in einer bestimmten Soll-FarbtiefenEbene wird aus dem Zusammenhang $FT_i=f_i(c)$ die erforderliche Konzentrationc bestimmt, und daraus ergeben sich durch Einsetzen in die Zusammenhänge $a^*_i=g_i(c)$ und $b^*_i=h_i(c)$ die Koordinaten a* und b* des Eich-Farborts der Standarfarbe i bei der gegebenen Soll-FarbtiefeFT. (Zwischenwerte zwischen den diskreten Einzelpunkten werden interpoliert.)

Es werden also die Eich-Farborte der Standardfarben nicht für jede mögliche Farbtiefenebene vorausberechnet oder gespeichert, sondern aus den Remissionsspektren der Probefärbungen oder den daraus ermittelten Zusammenhängen zwischen den Konzentrationen und den Farbraum-KoordinatenFT, a* und b* für die jeweils interessierende Farbtiefenebene berechnet. Vorgegeben bzw. gespeichert sind für jede Standard-farbe also lediglich die Remissionsspektren oder die genannten Zusammenhänge.

Unter Rezepturberechnung einer Farbmittelmischung oder Nachstellen einer Farbe wird generell die Aufgabe verstanden, die Mengenanteile der einzelnen Farben eines Satzes vorgegebener Standardfarben (Farbmittel, Farbtinten) definierter Eigenschaften zu bestimmen, welche in Mischung auf einem Substrat (innerhalb eines vorgegebenen Toleranzbereichs) denselben Farbeindruck hervorrufen wie ein vorgegebenes Farbmuster, d.h. die nachzustellende Sollfarbe mit einem bestimmten Soll-Farbort. Im Fall einer Färbung muss also die Färbung mit der zu bestimmenden Farbmittelmischung auf dem Substrat bezüglich Farbtiefe und Farbart (a*, b*) mit der nachzustellenden Sollfarbe übereinstimmen.

Als erstes werden die Soll-Farbkoordinaten $FT_s$, $a_s$* und $b_s$* der nachzustellenden Sollfarbe bestimmt. Die Soll-Farbartkoordinaten $a_s$* und $b_s$* werden in herkömmlicher Weise nach CIE aus dem Remissionsspektrum des nachzustellenden Färbemusters berechnet. Die Soll-Farbtiefe $FT_s$ wird entweder visuell bestimmt oder ebenfalls, wie schon erwähnt, aus dem Remissionsspektrum z.B. durch Filtration (gewichtete Integration über den Wellenlängenbereich) berechnet. Die Soll-Farbkoordinaten können natürlich auch, z.B. von früheren Messungen oder dergleichen, direkt vorgegeben werden. In Fig.1 ist der Farbort einer beispielsweisen Sollfarbe durch den Punkt $P_s$ angedeutet, wobei angenommen ist, dass es sich bei der dargestellten Farbtiefen-Ebene um die Soll-Farbtiefe $FT_s$ der Sollfarbe handelt.

Das Ziel der nachfolgenden Verfahrens- oder Berechnungsschritte ist die Bestimmung der relativen Mengenanteile $X_i$ der einzelnen Standardfarben an der gesuchten Farbmittelmischung, die auf dem Substrat den Sollfarbort$P_s$ mit der Soll-Farbtiefe$FT_s$ ergeben soll. Sämtliche Berechnungen laufen nur in der durch die Soll-Farbtiefe$FT_s$ vorgegebenen Farbtiefenebene ab.

Wie aus Fig.1 erhellt, stehen (im gezeigten Beispiel) acht Standardfarben mit den EichFarbortenP1-P8 zur Verfügung. Dies ergibt eine sehr grosse Zahl von verschiedenen Mischungsmöglichkeiten. Gemäss einem der wesentlichsten Aspekte der Erfindung werden zur Nachstellung einer Sollfarbe aber nur Mischungen aus maximal drei Standardfarben zugelassen. Dazu wird die durch die Soll-Farbtiefe $FT_s$ gegebene Farbtiefenebene des Farbraums in Dreiecksflächen segmentiert, deren Eckpunkte die Eich-Farborte der für die Nachstellung vorgesehenen Standardfarben sind und deren in der Regel gekrümmte Begrenzungslinien die Farborte aller Zweiermischungen von jeweils zwei Standardfarben darstellen. Die Dreiecksflächen sind so gewählt, dass sie nicht überlappen, sodass jeder Punkt innerhalb einer Dreiecksfläche den Farbort einer Dreiermischung der jeweils betreffenden, durch die Eckpunkte der Dreiecksfläche bestimmten Standardfarben darstellt. Jeder Farbort einer Dreiecksfläche ist somit durch ein einziges Rezept, d.h. eine einzige Mischung der drei betreffenden Standardfarben definiert, welche entweder nur eine einzige Standardfarbe enthält, wenn der betreffende Farbort mit einem der drei Eckpunkte der Dreiecksfläche zusammenfällt, oder zwei Standardfarben enthält, wenn der Farbort auf einer Begrenzungslinie der Dreiecksfläche liegt, oder alle drei Standardfarben enthält, wenn der Farbort im Inneren der Dreiecksfläche liegt. Im gewählten Beispiel in Fig.1 sind dies die drei Farben P2, P3 und P8.

Die Segmentierung der Farbtiefen-Ebenen in Dreiecksflächen kann mit den verschiedensten Standardfarben durchgeführt werden, wobei es einzig darauf ankommt, dass der Farbraum (d.h. die Fläche der Farbtiefen-Ebene für alle Farbtiefen) möglichst gut abgedeckt ist. Die für die Nachstellung herangezogenen und damit in die Segmentierung eingehenden Standardfarben an sich können nach verschiedensten Kriterien ausgewählt werden, beispielsweise applikatorische Eigenschaften der eingesetzen Farbstoffe, Echtheitsniveau, Preis, Liefermöglichkeit, Lagerkatalog etc. Das gleiche gilt auch für die Segmentierung d.h. die Festlegung der Dreiecksflächen selber. Auf diese Weise ist es möglich, alle diese Kriterien in die Rezepturberechnung mit einzubeziehen. Ferner können auf diese Weise auch unterschiedliche Rezepturen berechnet werden, z.B. eine Rezeptur auf Basis z.B. hoch-lichtechter Farbstoffe und eine Rezeptur auf Basis z.B. besonders preisgünstiger Farbstoffe, und so weiter.

Für die Rezepturberechnung muss also zunächst festgestellt werden, zu welcher der nach Obigem eingeteilten Dreiecksflächen der Soll-Farbort $P_s$ der nachzustellenden Soll-Farbe gehört, wodurch die an der gesuchten Mischung beteiligten (maximal drei) Standardfarben festgelegt sind. Danach sind die (sich zu 100% addierenden) relativen Mengenanteile der betreffenden Standardfarben zu bestimmen. Die dazu erforderlichen Schritte sind im folgenden näher beschrieben.

Als erstes müssen die Begrenzungslinien der einzelnen Dreiecksflächen berechnet werden. Dies geschieht durch punktweises Berechnen der Farborte a*, b* sämtlicher Zweiermischungen (in beliebig feinen Abstufungen) von jeweils zwei Standardfarben z.B. nach der Theorie von Kubelka und Munk.

Nach Kubelka-Munk lässt sich für jeden auf einem Substrat befindlichen Farbstoff für jede Wellenlänge ein charakteristischer Quotient $^K/_s$ gemäss folgender Beziehung angeben:

$$^K/_S=(1-R)^2/2R$$

Darin ist K eine von der Lichtabsorption bestimmte Konstante, S eine von der Lichtstreuung bestimmte Konstante und R die bei der betreffenden Wellenlänge gemessene Remission. K ist hauptsächlich durch den Farbstoff bestimmt, S hauptsächlich durch das Substrat.

Für eine Mischung aus n Farbstoffen mit den relativen Mengenanteilen

$$X_1 \ldots. X_n \left( \text{wobei} \sum_{i=1}^{n} X_i = 1 \right)$$

gilt

$$X_1 \left(\frac{K}{S}(1) - \frac{K}{S}(S)\right) + X_2 \left(\frac{K}{S}(2) - \frac{K}{S}(S)\right) + \cdots X_n \left(\frac{K}{S}(n) - \frac{K}{S}(S)\right) + \frac{K}{S}(S) = \frac{K}{S}(M)$$

Darin bedeuten $\frac{K}{S}$ (1) ...$\frac{K}{S}$ (n) die aus den Remissionen der einzelnen Farbstoffe 1...n auf dem Substrat berechneten Quotienten K/S für jeden einzelnen Farbstoff, $\frac{K}{S}$(S)den aus den Remissionen des reinen Substrats S berechneten Quotienten K/S für das Substrat allein und $\frac{K}{S}$(M) den resultierenden Quotienten $^K/_S$ für die Mischung aller Farbstoffe auf dem Substrat.

Die Remissionsspektren für die beteiligten Standardfarben auf dem interessierenden Substrat sind gemäss den vorstehenden Erläuterungen bekannt (z.B. im Rechner gespeichert), ebenso das Remissionsspektrum für das Substrat. Anhand der vorstehenden Formel kann also der Mischungs-Quotient $\frac{K}{S}$ (M) für jede beliebige Mischung (Mengenanteile$X_1$...$X_n$)der Standardfarben für alle Wellenlängen berechnet werden. Aus dem Mischungs-Quotien $\frac{K}{S}$ (M) ergibt sich das Remissionsspektrum $R_M(\lambda)$ der Farbmischung nach der Formel:

$$R_M = \left(1 + \frac{K}{S}(M)\right) - \sqrt{\left(\left[1 + \frac{K}{S}(M)\right]^2 - 1\right)}$$

worin $R_M$ die Remission bei einer Wellenlänge ist und für alle Wellenlängen berechnet werden muss.

Aus dem Remissionsspektrum $R_M(\lambda)$ der Farbmischung errechnen sich dann, analog der weiter vorne beschriebenen Berechnung der Eich-Farborte der Standardfarben, die Farborte der einzelnen Farbmischungen, insbesondere also auch diejenigen Farborte, welche die genannten Begrenzungslinien der einzelnen Dreiecksflächen definieren. Für jeden so berechneten Farbort ist somit das zugehörige, durch die relativen Mengenanteile $X_1$-$X_n$ definierte Mischungsverhältnis der beteiligten Standardfarben bekannt. (Fig.2).

Anhand eines einfachen Koordinaten-Vergleichs ist es nun möglich festzustellen, zu welcher Dreiecksfläche der nachzustellende Soll-Farbort $P_S$ gehört und welches die (maximal) drei an der Mischung beteiligten Standardfarben

sind.

Für die Bestimmung des gesuchten Mischungsverhältnisses des Soll-Farbons$P_S$ kann sich die weitere Berechnung auf die gefundene Dreiecksfläche beschränken.

Als ersten Schritt kann dann zunächst die Dreiecksfläche, z.B. wie in Fig.3 veranschaulicht, anhand von Gitterlinien strukturiert werden. Diese Gitterlinien werden gleich berechnet wie die Begrenzungslinien der Dreiecksflächen, der Unterschied besteht lediglich darin, dass sie die Farborte von Dreiermischungen (anstatt von Zweiermischungen) der beteiligten Standardfarben definieren. Die Fig.3 zeigt Gitterlinien mit relativen Mengenanteilen von 8, 20, 40, 60, 80 und 96% der StandardfarbeP1 (~horizontal) und relativen Mengenanteilen von 25, 50 und 75% der StandardfarbeP6 (~vertikal). Der mit $P_x$ bezeichnete beispielsweise Farbort definiert eine Mischung von 20% der StandardfarbeP1, 80%.25%=20% der StandardfarbeP6 und 80%.75%=60% der StandardfarbeP7.

Wenn der nachzustellende Soll-Farbort, wie in Fig.3 zum Beispiel der durch einen Kreis symbolisierte Soll-Farbort$P_{S1}$, zufällig auf einer Begrenzungslinie oder dem Schnittpunkt von zwei Gitterlinien liegt, ist das gesuchte Mischungsverhältnis unmittelbar ablesbar. Andernfalls kann die Anzahl der Gitterlinien erhöht werden (feinere Abstufungen), wobei man sich lediglich auf das Feld beschränken kann, in welchem der Soll-Farbort liegt, beispielsweise etwa der durch ein Kreuz symbolisierte Soll-Farbort $P_{S2}$ in Fig.3. Dieses Verfahren kann mit jeweils steigender Genauigkeit (Auflösung) fortgesetzt werden, bis der Soll-Farbort auf einen Kreuzungspunkt zu liegen kommt und das Mischungsverhältnis damit gefunden ist. Alternativ kann auch nach an sich bekannten Interpolationsmethoden gearbeitet werden.

Ein alternatives Verfahren zur Bestimmung des für den Soll-Farbort erforderlichen Mischungsverhältnisses besteht in der Anwendung modernerer iterativer Optimierungsalgorithmen, wie z.B. des in "Analytical Chemistry", Vol.45, No. 3, März1973 beschriebenen Simplex-Algorithmus. Solche Algorithmen führen in der Regel zu einem geringeren Programmier- und Rechenaufwand, ändern aber an den grundsätzlichen erfindungsgemässen Verfahrensschritten nichts.

In Fig.5 sind die oben beschriebenen einzelnen Schritte des der Erfindung zugrundeliegenden Rezepturbestimmungsverfahrens in Form eines Fluss-Diagramms nochmals übersichtlich zusammengefasst.

In dem Rezepturbestimmungsverfahren können zur Nachstellung einer Farbvorlage Farbstoffe der verschiedensten Farbstoffklassen eingesetzt werden, wobei es gleichgültig ist, ob wasserlösliche oder dispergierte Farbstoffe eingesetzt werden, insbesondere werden Dispersions-, Säure-, Metallkomplex-, Reaktiv-, Küpen-, Schwefel-, Direkt- und Pigment-Farbstoffe, sowie kationische Farbstoffe verwendet. In Betracht kommen auch natürliche Farbstoffe, Entwicklungsfarbstoffe, wie z.B. Naphthol-Farbstoffe, und Nahrungsmittelfarbstoffe. Femer kommen sämtliche Mischungen der genannten Farbstoffe in Betracht.

Als Beispiel für die verschiedenen Farbstoffklassen sei auf den Colour Index verwiesen; Colour Index, Third Edition, 1970/1971:Acid Dyes, Band 1, Seiten 1001 bis 1562; Basic Dyes, Band 1, Seiten 1607 bis 1688; Direct Dyes, Band 2, Seiten 2005 bis 2478; Disperse Dyes, Band 2, Seiten 2479 bis 2743; Food Dyes, Band 2, Seiten 2773 bis 2788; Leather Dyes, Band 2, Seiten 2799 bis 2835; Natural Dyes, Band 3, Seiten 3225 bis 3256; Piments, Band 3, Seiten 3267 bis 3390; Reactive Dyes, Band 3, Seiten 3391 bis 3560; Solvent Dyes, Band 3, Seiten 3563 bis 3648; Vat Dyes, Band 3, Seiten 3719 bis 3844.

Das Verfahren eignet sich zur Nachstellung einer Farbe auf allen Substraten, insbesondere auf textilen Fasermaterialien, wie Seide, Leder, Wolle, Polyamidfasern, Polyurethanfasern, cellulosehaltige Fasermaterialien, wie Baumwolle, Leinen und Hanf, sowie Celluloseviscose und Zellstoff, Polyesterfasern, Polyacrylfasem, Papier, Folien und Metallen, wie z.B. polymerbeschichtetes Aluminium. Ferner eignen sich Mischungen der genannten Fasermaterialien, wie z.B. Gemische aus Baumwolle mit Polyesterfasern oder Polyamidfasern.

Im Verfahren ist die Angabe des Substrates, welches zur Nachstellung verwendet wird, erforderlich, da die Farbstoffkonzentrationen u.a. vom Substrat abhängen. Das Substrat geht bei der Aufnahme der Remissionsspektren der Probefärbungen unterschiedlicher Farbstoffkonzentrationen in die Berechnung ein.

Das Verfahren bietet den Vorteil, dass z.B. bei der Aenderung eines Farbstoffes einer Gamme eines Farbstoffherstellers nicht mehr ein ganzer Farbatlas neu erstellt werden muss, sondem dass lediglich das Remissionsspektrum des neuen Farbstoffes gespeichert werden muss. Aus diesem können die Zweierkombinationstöne und die Mischungen aus diesem und zwei anderen Farbstoffen wie beschrieben berechnet werden.

Ein weiterer Vorteil des Verfahrens ist, dass alle zur Nachstellung notwendigen Daten, wie z.B. die Remissionsspektren der Farbstoffe, in einem Computer oder auf einer Diskette gespeichert werden können, so dass ohne eine einzige Ausfärbung, allein durch Einlesen verschiedener Disketten oder Eingabe von Eichdaten eine Vielzahl von "Farbatlanten" zur Verfügung steht.

Als Farbstoffe können praktisch alle handelsüblichen Farbstoffe verwendet werden.

Die folgenden Beispiele dienen zur Erläuterung des Rezepturbestimmungsverfahrens. Darin sind Teile Gewichtsteile und Prozente Gewichtsprozente.

Beispiel 1: Bei der folgenden Nachstellung eines Farbtons wird davon ausgegangen, dass die Remissionsspektren der für die Nachstellung einzusetzenden Farbstoffe vorliegen, dass der Farbraum segmentiert ist durch die Eich-Farborte verschiedener Farbstoffe, und dass die Segmentierung der in Fig.1 angegebenen Segmentierung entspricht.

Der nachzustellende Farbton ist ein Blauton mit den folgenden charakteristischen Daten: a*=-18,15; b*=-27,18; FT=0,66 (2/3Richttyptiefe).

Mit den genannten Daten ist der Soll-Farbort im FTa*b*-Farbraum definiert. Der nachzustellende Farbton liegt im Segment, welches durch die Farbstoffe mit den Koordinaten von P1, P6 und P7 charakterisiert ist (vgl. Fig.3, ⊙-Zeichen). Um den nachzustellenden Farbton aus dem Mischungsverhältnis der Farbstoffe dieses Segments zu bestimmen, wird das Segment strukturiert, indem die a*- und b*-Daten von Zweierkombinationstönen (Mischung der Farbstoffe mit den Koordinaten: P1 und P6, P1 und P7, P6 und P7) wie beschrieben errechnet werden.

In den folgenden Tabellen sind die a*- und b*-Daten einiger Zweierkombinationen angegeben. Die Farbstoffmischung bezieht sich immer auf die Farbtiefen-Kenngrösse FT=0,66. In den folgenden Tabellen bedeuten FSP1=Farbstoff mit dem Eich-FarbortP1, FSP6=Farbstoff mit dem Eich-FarbortP6 und FSP7=Farbstoff mit dem Eich-FarbortP7 im FTa*b*-Farbraum.

<u>Tabelle 1</u>

| Farbstoffmischung | | | | | a* | b* |
|---|---|---|---|---|---|---|
| 100 % | FSP1 | + | 0 % | FSP7 | -3,45 | 93,87 |
| 96 % | FSP1 | + | 4 % | FSP7 | -40,47 | 63,82 |
| 80 % | FSP1 | + | 20 % | FSP7 | -56,89 | 37,22 |
| 60 % | FSP1 | + | 40 % | FSP7 | -59,21 | 21,48 |
| 40 % | FSP1 | + | 60 % | FSP7 | -56,49 | 8,76 |
| 20 % | FSP1 | + | 80 % | FSP7 | -49,87 | -4,68 |
| 8 % | FSP1 | + | 92 % | FSP7 | -41,68 | -16,02 |
| 0 % | FSP1 | + | 100 % | FSP7 | -32,55 | -26,70 |

Tabelle 2

| Farbstoffmischung | a* | b* |
|---|---|---|
| 100 % FSP6 + 0 % FSP7 | 12,22 | -46,16 |
| 75 % FSP6 + 25 % FSP7 | 2,24 | -42,79 |
| 50 % FSP6 + 50 % FSP7 | -7,44 | -38,54 |
| 25 % FSP6 + 75 % FSP7 | -17,53 | -33,88 |
| 0 % FSP6 + 100 % FSP7 | -32,55 | -26,70 |

Tabelle 3

| Farbstoffmischung | a* | b* |
|---|---|---|
| 100 % FSP1 + 0 % FSP6 | -3,45 | 93,87 |
| 96 % FSP1 + 4 % FSP6 | -23,36 | 55,59 |
| 80 % FSP1 + 20 % FSP6 | -28,91 | 23,00 |
| 60 % FSP1 + 40 % FSP6 | -26,43 | 5,32 |
| 40 % FSP1 + 60 % FSP6 | -20,68 | -7,19 |
| 20 % FSP1 + 80 % FSP6 | -10,97 | -21,17 |
| 8 % FSP1 + 92 % FSP6 | -0,69 | -33,01 |
| 0 % FSP1 + 100 % FSP6 | 12,22 | -46,16 |

Die genannte Strukturierung führt durch Verbinden der errechneten a*- und b*-Daten zu der Fig.3, wobei alle Punkte 100% ergeben; so setzen sich z.B. die ersten fünf Punkte auf der Linie mit 96% FSP1 wie folgt zusammen: 96% FSP1+0% FSP6+4% FSP7; 96% FSP1+1% FSP6+3% FSP7; 96% FSP1+2% FSP6+2% FSP7; 96% FSP1+3% FSP6+1% FSP7; 96% FSP1+4% FSP6+0% FSP7.

Die Charakterisierung der Farbtiefen-Kenngrösse z.B. als 2/3Richttyptiefe bedeutet, dass die für ein bestimmtes Substrat erforderliche Einsatz-Konzentration (z.B. gFarbstoff pro kgDruckpaste) dieser Farbstoffe in dieser Farbtiefe bekannt ist:

Farbstoff mit den Koordinaten P1 in FT=0,66: 16,9 g/kg
Farbstoff mit den Koordinaten P6 in FT=0,66: 45,4 g/kg
Farbstoff mit den Koordinaten P7 in FT=0,66: 48,1 g/kg

Der beispielsweise gewünschte Blauton mit den Daten: FT=0,66; a*=-18,15; b*=-27,18 liegt in der Farbtiefenebene mit FT=0,66 auf einem Strukturierungskreuz aus 8% FSP1 und 46% FSP6 und 46% FSP7. Die Summe der Mischung muss 100% (≙ 1) ergeben.

Zur Bestimmung der Einsatzmengen ist es notwendig, die Menge Farbstoff für verschiedene Farbtiefen zu kennen. Die Einsatzmenge des Farbstoffes mit den Koordinaten P1 beträgt bei verschiedenen Farbtiefen FT:
Farbstoff mit den Koordinaten P1 in:

| | |
|---|---|
| FT = 1,0 : | 36,4 g/kg |
| FT = 0,66 : | 16,9 g/kg |
| FT = 0,33 : | 8,4 g/kg |
| FT = 0,16 : | 4,1 g/kg |

Die Einsatzmenge des Farbstoffes mit den Koordinaten P6 beträgt bei verschiedenen Farbtiefen FT:
Farbstoff mit den Koordinaten P6 in:

| | |
|---|---|
| FT = 1,0 : | 71,3 g/kg |
| FT = 0,66 : | 45,4 g/kg |
| FT = 0,33 : | 22,1 g/kg |
| FT = 0,16 : | 10,5g/kg |

Die Einsatzmenge des Farbstoffes mit den Koordinaten P7 beträgt bei verschiedenen Farbtiefen FT:
Farbstoff mit den Koordinaten P7 in:

| | |
|---|---|
| FT = 1,0 : | 79,0 g/kg |
| FT = 0,66 : | 48,1 g/kg |
| FT = 0,33 : | 20,9 g/kg |
| FT = 0,16 : | 9,5g/kg |

Aus den vorgenannten Einsatzmengen der Farbstoffe mit den Koordinaten P1, P6 und P7 kann die substratspezifische Konzentrationskurve ermittelt werden. Für den gewünschten Farbton mit den Daten FT = 0,66; a* = -18,15; b* = -27,18 ergeben sich folgende Einsatzmengen in g Farbstoff pro kg Druckpaste:

1,35 g/kg Farbstoff mit den Koordinaten von P1
20,9 g/kg Farbstoff mit den Koordinaten von P6
22,14 g/kg Farbstoff mit den Koordinaten von P7

Mit der angegebenen Mischung wird ein Baumwollgewebe in dem gewünschten Blauton bedruckt in der Richttyptiefe 2/3.

Die eingesetzten Farbstoffe sind Reaktivfarbstoffe mit folgenden Konstitutionen:

FSP1: 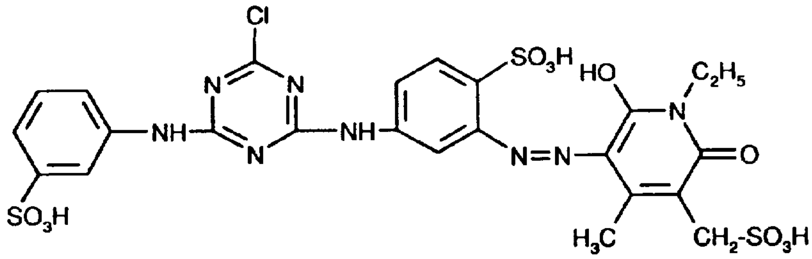 (100)

FSP6: 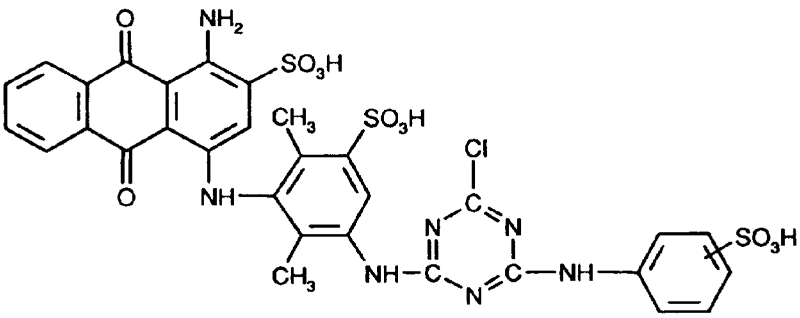 (101)

FSP7: 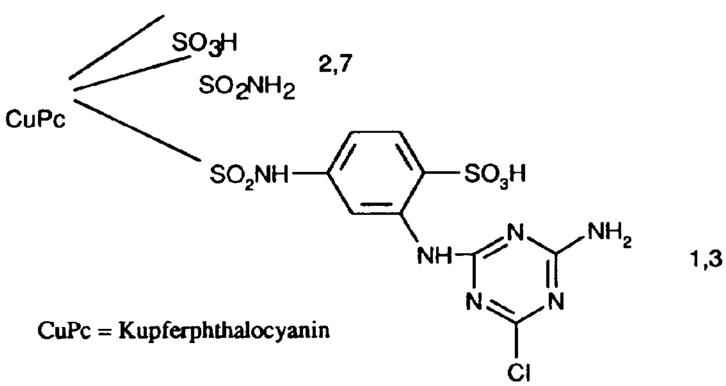 (102)

CuPc = Kupferphthalocyanin

<u>Beispiel 2</u>: Zur Nachstellung ist ein Farbort (Grünton) mit den Koordinaten FT=0,66; a*=-46,00; b*=16,00 ausgewählt. Bei der folgenden Nachstellung wird davon ausgegangen, dass die Remissionsspektren der für die Nachstellung einzusetzenden Farbstoffe vorliegen, dass der Farbraum segmentiert ist durch die Eich-Farborte verschiedener Farbstoffe, dass die Segmentierung der in Fig.1 angegebenen Segmentierung entspricht, und dass dieses Segment errechnet und strukturiert worden ist gemäss Beispiel1, siehe Fig.2 und3. Der Farbort mit den gewünschten Koordinaten lieght weder auf einem Strukturierungskreuz noch auf einer der Verbindungslinien der Koordinaten von P1P7, P1P6, P6P7. Um diesen Farbort zu berechnen, wird gemäss der vorstehenden Verfahrensbeschreibung vorgegangen. Die zur Nachstellung ausgewählten Koordinaten in der Richttyptiefe 2/3 sind in Fig.3 durch das +-Zeichen dargestellt. Mit der erfindungsgemässen Berechnung ergeben sich 63Teile des gelbfärbenden Farbstoffes mit den Koordinaten von P1. Für die dazugehörenden Mischungsanteile der Farbstoffe mit den Koordinaten von P6 und P7 errechnet sich folgende Verteilung dieser Farbstoffe: 26,5% des Farbstoffes mit den Koordinaten von P6 und 73,5% des Farbstoffes mit den Koordinaten von P7. Der Gelbanteil beträgt 63Teile, so dass sich die restlichen 37Teile im genannten %-Verhältnis der Farbstoffe mit den Koordinaten von P6 und P7 wie folgt ergeben:

9,8 Teile des blaufärbenden Farbstoffes mit den Koordinaten von P6

27,2 Teile des türkisfärbenden Farbstoffes mit den Koordinaten von P7.

Zur Berechnung der Konzentration der Farbstoffe in der Druckpaste wird gemäss den Angaben in Beispiel1 für die Farbtiefen-Kenngrösse FT=0,66 (2/3Richttyptiefe) folgende Konzentration errechnet:

10,6 g/kg des Farbstoffes mit den Koordinaten von P1
4,4 g/kg des Farbstoffes mit den Koordinaten von P6
13,1 g/kg des Farbstoffes mit den Koordinaten von P7.

Mit der angegebenen Mischung wird ein Baumwollgewebe in dem gewünschten Grünton in der Richttyptiefe 2/3 bedruckt.

Das Rezepturbestimmungsverfahren wird vorzugsweise unter Verwendung eines geeigneten programmierten Computers durchgeführt. Ein Ausführungsbeispiel einer typischen Rezepturberechnungsvorrichtung ist in Fig.6 schematisch dargestellt.

Die Vorrichtung umfasst einen handelsüblichen Personal-Computer 100 z.B. der 386-er-Klasse mit einer Eingabetastatur 101 und einer Bildschirmanzeige 102 sowie einen Speicher 103. Ferner ist an den Computer 100 ein Remissionsspektrometer 104 angeschlossen. Im Speicher 103 sind die Remissionsspektren von Probefärbungen unterschiedlicher Farbtiefen der zur Verfügung stehenden Standardfarben abgespeichert. Diese können z.B. mittels des Spektrometers 104 aufgenommen worden sein. Das Spektrometer 104 dient ferner zum Aufnehmen des Remissionsspektrums eines nachzustellenden Farbmusters 105. Das Spektrometer kann auch dazu ausgebildet sein, aus dem Remissionsspektrum die Farbart-Koordinatena* und b* und die Farbtiefe FT des Farbmusters 105 zu berechnen. Andernfalls werden diese Grössen im Computer 100 berechnet. Mit der Tastatur 101 können die Soll-Farbkoordinaten der nachzustellenden Soll-Farbe auch direkt eingegeben werden. Der Computer führt anhand der im Speicher 103 abgelegten Daten der Standardfarben und der eingegebenen bzw. vom Spektrometer 104 eingelesenen Daten des nachzustellenden Farbmusters die vorstehend beschriebenen Berechnungsschritte durch und gibt das Ergebnis auf der Bildschirmanzeige 102 aus.

Alternativ oder zusätzlich kann der Computer 100 noch mit einem Eingang 106 versehen sein, über den ihm Soll-Farbort-Koordinaten einer nachzustellenden oder zu erzeugenden Farbe von einem anderen Eingabegerät zugeführt werden können. Dabei kann es sich z.B. um ein computerunterstütztes Zeichengerät (CAD) handeln, mit dem ein z. B. mittels Scanner oder Videokamera aufgenommenes oder sonstwie erzeugtes Bild oder Design auf einem Bildschirm visualisiert und insbesondere bezüglich seiner Farbe verändert werden kann und das die Farbkoordinaten des zu erzeugenden Bildes an den Computer liefert.

In Fig.7 ist blockschematisch ein Ausführungsbeispiel einer erfindungsgemässen Anlage zur Herstellung einer Farbmittelmischung, z.B. einer Drucktinte dargestellt. Die Anlage umfasst einen Computer 100 mit Eingabetastatur 101, Speicher 103 und Remissions-spektrometer 104 sowie einen Mischungsregler 200, der eine Reihe von Ventilen 201-206 betätigt. Letztere liegen in Leitungen 211-216, die von Vorratstanks 221-226 für je eine Standardfarbe zu einem Mischbehälter 230 führen.

Der Computer 100 berechnet die für die Nachstellung des Farbmusters 105 erforderlichen Mengenanteile (Rezeptur) der Standardfarben und gibt diese an den Mischungsregler 200 weiter. Dieser betätigt aufgrund dieser Daten die Ventile 201-206 und lässt die der Rezeptur entsprechenden Mengen von Standardfarben in den Mischbehälter 230 fliessen. Rezepturgesteuerte Mischungsregler für die Herstellung von Farbmittelmischungen sind an sich bekannt und bedürfen deshalb keiner näheren Erläuterung.

Die Anlage zur Herstellung einer Farbmittelmischung kann auch innerhalb eines Färbeprozesses bzw. als Teil einer Färbevorrichtung eingesetzt werden. Dabei wird die für die dem Farbmuster entsprechende Färbung einzusetzende Farbmittelmischung wie beschrieben hergestellt und dann dem Färbeprozess zugeführt. Bei der Zubereitung der Farbmittelmischung werden die für die zu erreichende Farbtiefe erforderlichen (bekannten) Basis-Konzentrationen der einzelnen Standardfarben entsprechend den bei der Rezeptur-Bestimmung ermittelten relativen Mengenanteilen der dabei bestimmten Standardfarben gewichtet und die Standardfarben entsprechend gemischt.

Das beschriebene Rezepturberechnungsverfahren lässt sich gemäss einem weiteren Aspekt der Erfindung auch zur Steuerung einer Druckvorrichtung, insbesondere eines Tintenstrahldruckers einsetzen. In Fig.8 ist blockschematisch ein Ausführungsbeispiel eines erfindungsgemässen Mehrfarben-Tintenstrahldruckers dargestellt, wobei die konventionellen, für das Verständnis der Erfindung unwesentlichen Bestandteile weggelassen sind.

Der Drucker umfasst einen ersten Computer 100 mit Speicher 103 und Steuereingang 106, einen Mischungsregler 300, eine Anzahl von z.B. acht Dosiereinrichtungen 301-308, entsprechend viele Vorratsbehälter 321-328 für Standarddruckfarben, acht Farbdruckköpfe 331-338, die mit den Vorratsbehältern über die Dosiereinrichtungen enthaltende Leitungen 311-318 verbunden sind, und einen zweiten Computer 400 mit einem Steuereingang 406 und einem Speicher 403.

Der zweite Computer 400 dient zur Steuerung der diversen konventionellen Funktionen des Druckers, z.B. auch der Positionierung der Druckköpfe 331-338. Die Befehle dazu erhält er von einem externen Steuergerät, üblicherweise einem Computer oder eventuell auch einem CAD-Gerät, über seinen Steuereingang406.

Der erste Rechner 100 erhält ebenfalls vom externen Steuergerät über seinen Steuereingang die Information über die Farbe der zu druckenden Bildpunkte in Form von Soll-Farbkoordinaten FT, a* und b*. Aus dieser Information und den gespeicherten Daten der in den Vorratsbehältern 321-328 vorhandenen Standardfarben berechnet er dann die

Rezeptur der zu druckenden Farbmischung und gibt sie an den Mischungsregler 300 weiter. Dieser wandelt die Rezepturdaten in volumetrische Daten um und steuert damit die Dosiereinrichtungen 301-308. Diese liefem eine den volumetrischen Daten entsprechende Menge der einzelnen Standarddruckfarben in Form von Einzeltröpfchen an die zugeordneten Druckköpfe, welche diese auf das Substrat aufbringen.

Der erste Computer berechnet also aufgrund von vorgegebenen Soll-Farbkoordinaten die Rezepturen der erforderlichen Farbmittelmischungen. Wenn man eine beschränkte Anzahl der mit dem Drucker zu druckenden Farborte vorgibt, so kann jeder Farbort beziehungsweise der diesen definierende Satz von Farbkoordinaten durch einen Code, z.B. eine Nummer gekennzeichnet werden und die Codes können zusammen mit den für die durch sie gekennzeichneten Farborte berechneten Rezepturen in Form einer Tabelle im Speicher 403 abgelegt werden. Für das Drucken einer gewünschten Farbe genügt es dann, dem zweiten Computer 400 über seinen Eingang 406 den dieser Farbe zugeordneten Code zuzuführen. Der Computer 400 liest dann aufgrund des Codes die erforderliche Rezeptur an dem Speicher 403 und übergibt diese an den Mischungsregler 300 zur weiteren Verarbeitung. Dieser Vorgang ist in der Fig.8 durch die strichlierte Linie 401 symbolisiert.

Der erste Computer 100 und sein Speicher 103 werden in diesem Fall nur zur Erstellung der im Speicher 403 abgelegten Code-Rezeptur-Tabelle benötigt und können auch ausserhalb des Druckers angeordnet sein, wenn der zweite Computer 400 so programmiert ist, dass die Code-Rezeptur-Tabelle von aussen in den Speicher 403 geladen werden kann (Down Loading/Firmware).

Selbstverständlich ist die Erfindung nicht nur für Tintenstrahldrucker geeignet, sondern lässt sich überall da mit Vorteil einsetzen, wo eine Farbvorlage in ein Farbgebungssystem exakt übertragen werden soll.

**Patentansprüche**

**1.** Verfahren zur Steuerung einer Mehrfarben-Druckvorrichtung, insbesondere eines Mehrfarben-Tintenstrahldruckers, welche mit einem vorgegebenen Satz von Standardfarbmitteln ausgestattet ist, wobei die für die Erzielung einer gewünschten Sollfarbe erforderlichen Mengenanteile der auf ein Substrat zu applizierenden Standardfarbmittel aufgrund einer Rezeptur-Bestimmung für eine auf dem Substrat denselben Farbeindruck wie die nachzustellende Sollfarbe hervorrufende Farbmittelmischung gesteuert werden, bei welcher Rezepturbestimmung die Mengenanteile der einzelnen Farben des Satzes vorgegebener Standardfarbmittel in der Farbmittelmischung ermittelt werden und bei welcher Rezepturbestimmung ferner in einem dreidimensionalen kartesischen Farbraum, dessen drei Koordinaten-Achsen die beiden Farbart-Koordinaten nach CIE und eine Farbtiefe-Koordinate darstellen, anhand einer Soll-Farbtiefe-Koordinate und zweier Soll-Farbart-Koordinaten ein Soll-Farbort für die nachzustellende Sollfarbe festgelegt wird, in einer durch die Soll-Farbtiefe-Koordinate des Soll-Farborts definierten Soll-Farbtiefe-Ebene des Farbraums die durch die Farbart-Koordinaten ausgedrückten Eich-Farborte der einzelnen vorgegebenen Standardfarben bestimmt werden, die Soll-Farbtiefe-Ebene in nicht überlappende Dreiecksflächen segmentiert wird, deren Eckpunkte die Eich-Farborte von jeweils drei der Standardfarben sind, deren Begrenzungslinien die Farborte aller Zweiermischungen von jeweils zwei der drei eine Dreiecksfläche festlegenden Standardfarben darstellen und deren innere Punkte die Farborte aller Dreiermischungen der jeweils betreffenden drei Standardfarben für diese Soll-Farbtiefe angeben, diejenigen Standardfarben bestimmt werden, in deren durch sie festgelegter Dreiecksfläche sich der Soll-Farbort der nachzustellenden Sollfarbe befindet, diejenige Mischung der so bestimmten drei Standardfarben ermittelt wird, deren Farbort innerhalb eines vorgegebenen Toleranzbereichs mit dem Soll-Farbort der nachzustellenden Sollfarbe überinstimmt, und die relativen Mengenanteile der drei Standardfarben an der so ermittelten Mischung als Ergebnis der Rezeptur-Bestimmung ausgegeben und/oder gespeichert werden.

**2.** Verfahren nach Anspruch 1, wobei die Eich-Farborte der Standardfarben aus deren Remissionsspektren rechnerisch ermittelt werden.

**3.** Verfahren nach Anspruch 1, wobei die Eich-Farborte der Standardfarben durch farbmetrische Ausmessung physikalischer Färbemuster mit der durch den Soll-Farbort der nachzustellenden Sollfarbe definierten Soll-Farbtiefe ermittelt werden.

**4.** Verfahren nach einem der Ansprüche 1-3, wobei der Soll-Farbort der nachzustellenden Sollfarbe durch farbmetrische Ausmessung der Sollfarbe festgelegt wird.

**5.** Verfahren nach einem der Ansprüche 1-4, wobei für die Bestimmung der gesuchten Mischung der drei Standardfarben jeweils für eine ausgewählte Mischung der zugehörige Farbort berechnet und mit dem Soll-Farbort verglichen wird, und die relativen Mengenanteile der Standardfarben an der ausgewählten Mischung sukzessive solange

variiert werden, bis der berechnete Farbort innerhalb des vorgegebenen Toleranzbereichs mit dem Soll-Farbort der nachzustellenden Sollfarbe übereinstimmt.

**6.** Verfahren nach einem der Ansprüche 1-5, wobei die Segmentierung der Soll-Farbtiefe-Ebene in Dreiecksflächen nach vorgegebenen Auswahlkriterien wie z.B. applikatorischen Eigenschaften und/oder Preisklassen erfolgt.

**7.** Anlage zur Herstellung einer Farbmittelmischung mit einer Vorrichtung (100-105) zur Bestimmung der Rezeptur der herzustellenden Farbmittelmischung und mit einer von dieser gesteuerten Misch- und Dosiereinrichtung (200-230) für vorrätig gehaltene Standardfarben, wobei die Vorrichtung zur Bestimmung der Rezeptur einen Rechner (100) aufweist, der im Verwendungsfall aus gespeicherten Daten eines Satzes vorgegebener Standardfarben und aus eingegebenen farbmetrischen Daten der Sollfarbe die Mengenanteile der einzelnen Standardfarben in der zu berechnenden Farbmittelmischung bestimmt, wobei der Rechner (100) im Verwendungsfall die Rezepturberechnung auf der Grundlage eines dreidimensionalen kartesischen Farbraums durchführt, dessen drei Koordinaten-Achsen die beiden Farbart-Koordinaten nach CIE und eine Farbtiefe-Koordinate darstellen, wobei die nachzustellende Sollfarbe durch eine Soll-Farbtiefe-Koordinate und zwei Soll-FarbartKoordinaten festgelegt ist, und wobei der Rechner (100) im Verwendungsfall in einer durch die Soll-Farbtiefe-Koordinate des Soll-Farborts definierten Soll-Farbtiefe-Ebene des Farbraums die durch die Farbart-Koordinaten ausgedrückten Eich-Farborte der einzelnen vorgegebenen Standardfarben bestimmt, die Soll-Farbtiefe-Ebene in nicht überlappende Dreiecksflächen segmentiert, deren Eckpunkte die Eich-Farborte von jeweils drei der Standardfarben sind, deren Begrenzungslinien die Farborte aller Zweiermischungen von jeweils zwei der drei eine Dreiecksfläche festlegenden Standardfarben darstellen und deren innere Punkte die Farborte aller Dreiermischungen der jeweils betreffenden drei Standardfarben angeben, diejenigen Standardfarben bestimmt, in deren durch sie festgelegter Dreiecksfläche sich der Soll-Farbort der nachzustellenden Sollfarbe befindet, diejenige Mischung der so bestimmten drei Standardfarben ermittelt, deren Farbort innerhalb eines vorgegebenen Toleranzbereichs mit dem Soll-Farbort der nachzustellenden Sollfarbe überinstimmt, und die relativen Mengenanteile der drei Standardfarben an der so ermittelten Mischung als Ergebnis der Rezeptur-Bestimmung angibt und/oder speichert.

**8.** Mehrfarbendruckvorrichtung mit einer Anzahl von Vorratsbehältern (321-328) für Standarddruckfarben, mit einer Anzahl von diesen zugeordneten und über Dosiereinrichtungen (301-308) verbundenen Druckköpfen (331-338) und mit einer Steuereinrichtung (400, 300) für die Dosiereinrichtungen und die Druckköpfe, aufweisend eine Rezepturberechnungsvorrichtung (100), welche im Verwendungsfall aufgrund von ihr zugeführten Farbdaten und gespeicherten Daten über die Standarddruckfarben die Mengenanteile der von den Druckköpfen zu applizierenden Standarddruckfarben steuert und welche einen Rechner (100) aufweist, der aus gespeicherten Daten eines Satzes vorgegebener Standardfarben und aus eingegebenen farbmetrischen Daten der Sollfarbe die Mengenanteile der einzelnen Standardfarben in der zu berechnenden Farbmittelmischung bestimmt, wobei der Rechner (100) im Verwendungsfall die Rezepturberechnung auf der Grundlage eines dreidimensionalen kartesischen Farbraums durchführt, dessen drei Koordinaten-Achsen die beiden Farbart-Koordinaten nach CIE und eine Farbtiefe-Koordinate darstellen, wobei die nachzustellende Sollfarbe durch eine Soll-Farbtiefe-Koordinate und zwei Soll-Farbart-Koordinaten festgelegt ist, und wobei der Rechner (100) im Verwendungsfall in einer durch die Soll-Farbtiefe-Koordinate des Soll-Farborts definierten Soll-Farbtiefe-Ebene des Farbraums die durch die Farbart-Koordinaten ausgedrückten Eich-Farborte der einzelnen vorgegebenen Standardfarben bestimmt, die Soll-Farbtiefe-Ebene in nicht überlappende Dreiecksflächen segmentiert, deren Eckpunkte die Eich-Farborte von jeweils drei der Standardfarben sind, deren Begrenzungslinien die Farborte aller Zweiermischungen von jeweils zwei der drei eine Dreiecksfläche festlegenden Standardfarben darstellen und deren innere Punkte die Farborte aller Dreiermischungen der jeweils betreffenden drei Standardfarben angeben, diejenigen Standardfarben bestimmt, in deren durch sie festgelegter Dreiecksfläche sich der Soll-Farbort der nachzustellenden Sollfarbe befindet, diejenige Mischung der so bestimmten drei Standardfarben ermittelt, deren Farbort innerhalb eines vorgegebenen Toleranzbereichs mit dem Soll-Farbort der nachzustellenden Sollfarbe überinstimmt, und die relativen Mengenanteile der drei Standardfarben an der so ermittelten Mischung als Ergebnis der Rezeptur-Bestimmung angibt und/oder speichert.

## Claims

**1.** A method of controlling a multi-colour printing apparatus, especially a multi-colour ink-jet printer, that is equipped with a given set of standard colorants, wherein the proportions of the standard colorants to be applied to a substrate that are required to obtain a desired target colour are controlled on the basis of a recipe determination of a colorant mixture that produces the same perceived colour on the substrate as the target colour to be rematched, in which recipe determination the proportions of the individual colours of the set of given standard colorants in the colorant

mixture are determined, and in which recipe determination a target colour location for the target colour to be rematched is also established in a three-dimensional cartesian colour space the three coordinate axes of which represent the two CIE colour type coordinates and a depth of shade coordinate, using a target depth of shade coordinate and two target colour type coordinates, the calibration colour locations of the individual given standard colours expressed by the colour type coordinates are determined in a target depth of shade plane of the colour space defined by the target depth of shade coordinate of the target colour location, the target depth of shade plane is segmented into non-overlapping triangular areas the corners of which are the calibration colour locations of in each case three of the standard colours, the boundary lines of which represent the colour locations of all mixtures of two of the three standard colours establishing a triangular area and the interior points of which indicate the colour locations of all three-colour mixtures of the relevant three standard colours for that target depth of shade, those standard colours are determined that establish the triangular area in which the target colour location of the target colour to be rematched is situated, that mixture of the three standard colours so determined the colour location of which coincides within a given tolerance range with the target colour location of the target colour to be rematched is found, and the relative proportions of the three standard colours in the mixture so found are output and/or stored as the result of the recipe determination.

**2.** A method according to claim 1, wherein the calibration colour locations of the standard colours are calculated from their reflectance spectra.

**3.** A method according to claim 1, wherein the calibration colour locations of the standard colours are determined by colorimetric measurement of physical colour samples having the target depth of shade defined by the target colour location of the target colour to be rematched.

**4.** A method according to any one of claims 1 to 3, wherein the target colour location of the target colour to be rematched is established by colorimetric measurement of the target colour.

**5.** A method according to any one of claims 1 to 4, wherein, in order to determine the desired mixture of the three standard colours, the associated colour location is calculated for a selected mixture and compared with the target colour location, and the relative proportions of the standard colours in the selected mixture are varied successively until the calculated colour location coincides within the given tolerance range with the target colour location of the target colour to be rematched.

**6.** A method according to any one of claims 1 to 5, wherein the segmentation of the target depth of shade plane into triangular areas is effected in accordance with given selection criteria, such as application characteristics and/or price bands.

**7.** A system for preparing a colorant mixture, having an apparatus (100-105) for determining the recipe of the colorant mixture to be prepared and having a mixing and metering device (200-230), controlled by that apparatus, for standard colours kept in stock, wherein the apparatus for determining the recipe has a computer (100) that, when used, determines from stored data of a set of given standard colours and from input colorimetric data of the target colour the proportions of the individual standard colours in the colorant mixture to be calculated, wherein the computer (100), when used, calculates the recipe on the basis of a three-dimensional cartesian colour space the three coordinate axes of which represent the two CIE colour type coordinates and a depth of shade coordinate, the target colour to be rematched being established by a target depth of shade coordinate and two target colour type coordinates, and wherein the computer (100), when used, determines, in a target depth of shade plane of the colour space defined by the target depth of shade coordinate of the target colour location, the calibration colour locations, expressed by the colour type coordinates, of the individual given standard colours, segments the target depth of shade plane into non-overlapping triangular areas the corners of which are the calibration colour locations of in each case three of the standard colours, the boundary lines of which are the colour locations of all mixtures of two of the three standard colours establishing a triangular area and the interior points of which indicate the colour locations of all three-colour mixtures of the relevant three standard colours, determines those standard colours that establish the triangular area in which the target colour location of the target colour to be rematched is situated, finds that mixture of the three standard colours so determined the colour location of which coincides within a given tolerance range with the target colour location of the target colour to be rematched, and indicates and/or stores as the result of the recipe determination the relative proportions of the three standard colours in the mixture so found.

**8.** A multi-colour printing apparatus having a number of supply vessels (321-328) for standard printing colours, having

a number of printing heads (331-338) associated with the supply vessels and connected by way of metering devices (301-308) and having a control device (400, 300) for the metering devices and the printing heads, comprising a recipe calculating apparatus (100) that, when used, controls the proportions of the standard printing colours to be applied by the printing heads on the basis of colour data supplied to it and stored data relating to the standard printing colours and that comprises a computer (100) that determines the proportions of the individual standard colours in the colorant mixture to be calculated from stored data of a set of given standard colours and from input colorimetric data of the target colour, wherein, when used, the computer (100) calculates the recipe on the basis of a three-dimensional cartesian colour space the three coordinate axes of which represent the two CIE colour type coordinates and a depth of shade coordinate, the target colour to be rematched being established by a target depth of shade coordinate and two target colour type coordinates, and wherein the computer (100), when used, determines, in a target depth of shade plane of the colour space defined by the target depth of shade coordinate of the target colour location, the calibration colour locations, expressed by the colour type coordinates, of the individual given standard colours, segments the target depth of shade plane into non-overlapping triangular areas the corners of which are the calibration colour locations of in each case three of the standard colours, the boundary lines of which are the colour locations of all mixtures of two of the three standard colours establishing a triangular area and the interior points of which indicate the colour locations of all three-colour mixtures of the relevant three standard colours, determines those standard colours that establish the triangular area in which the target colour location of the target colour to be rematched is situated, finds that mixture of the three standard colours so determined the colour location of which coincides within a given tolerance range with the target colour location of the target colour to be rematched, and indicates and/or stores as the result of the recipe determination the relative proportions of the three standard colours in the mixture so found.

**Revendications**

1. Procédé de commande d'un dispositif d'impression en plusieurs couleurs, en particulier d'une imprimante à jets d'encre à plusieurs couleurs, qui est équipé d'un jeu prescrit de colorants standard, procédé dans lequel les proportions, nécessaires pour obtenir une couleur prescrite, désirée, des colorants standards à appliquer sur un substrat sont commandées sur la base d'une détermination de formule pour un mélange de colorants provoquant, sur le substrat, le même effet de couleur que la couleur prescrite à reproduire, détermination d'une formule dans le cas de la quelle sont établies les proportions des différentes couleurs du jeu de composants standard prescrits dans le mélange de composants et détermination d'une formule dans le cas de laquelle, en outre, dans un espace chromatique cartésien tridimensionnel, dont trois axes de coordonnées représentent les deux coordonnées de chrominance selon la Commission Internationale de l'Éclairage CIE et une coordonnée de profondeur de couleur, une position chromatique prescrite est définie, pour la couleur prescrite à reproduire, à l'aide d'une coordonnée de profondeur de couleur prescrite et de deux coordonnées de chrominance prescrites, dans le cas de laquelle, dans un plan de profondeur de couleur prescrite, défini par la coordonnée de profondeur de couleur prescrite de la position chromatique prescrite, de l'espace chromatique, sont déterminées les positions chromatiques étalons, exprimées par les coordonnées de chrominance, des différentes couleurs standard prescrites dans le cas de laquelle le plan de profondeur de couleur prescrite est segmenté en surfaces triangulaires qui ne se recouvrent pas, dont les sommets sont les positions chromatiques étalons de respectivement trois des couleurs standard, dont les lignes de frontière représentent les positions chromatiques de tous les mélanges binaires de chaque groupe de deux des trois couleurs standard définissant une surface triangulaire et dont les points intérieurs indiquent les positions chromatiques de tous les mélanges ternaires des trois couleurs standards respectivement en question pour cette profondeur de couleur prescrite, dans le cas de laquelle sont déterminées les couleurs standards dans la surface triangulaire, définie par elles, desquelles se trouve la position chromatique prescrite de la couleur prescrite à reproduire, dans le cas de laquelle on établit le mélange des trois couleurs standards ainsi déterminées dont la position chromatique coïncide, à l'intérieur d'une plage de tolérance prescrite, avec la position chromatique prescrite de la couleur prescrite à reproduire, et dans le cas de laquelle les proportions relatives des trois couleurs standards concernant le mélange ainsi établi sont émises et/ou mémorisées comme résultat de la détermination de la formule.

2. Procédé selon la revendication 1, dans lequel les positions chromatiques étalons des couleurs standard sont établies par le calcul à partir de leurs spectres de réémission.

3. Procédé selon la revendication 1, dans lequel les positions chromatiques étalons des couleurs standard sont établies par mesure colorimétrique d'échantillons de couleur physiques présentant la profondeur de couleur prescrite définie par la position chromatique prescrite de la couleur prescrite à reproduire.

**4.** Procédé selon l'une des revendications 1-3, dans lequel la position chromatique prescrite de la couleur prescrite à reproduire est établie par une mesure colorimétrique de la couleur prescrite.

**5.** Procédé selon l'une des revendications 1-4, dans lequel, pour la détermination du mélange recherché des trois couleurs standard, on calcule, pour chacun des mélanges choisis, la position chromatique correspondante et on la compare avec la position chromatique prescrite et on fait varier successivement les proportions relatives des couleurs standard dans le mélange choisi jusqu'à ce que la position chromatique calculée coïncide, à l'intérieur de la plage de tolérance prescrite, avec la position chromatique prescrite de la couleur prescrite à reproduire.

**6.** Procédé selon l'une des revendications 1-5, dans lequel la segmentation du plan de profondeur de couleur prescrite en surfaces triangulaires se fait d'après les critères de choix prescrits comme par exemple des caractéristiques d'application et/ou des classes de prix.

**7.** Installation de production d'un mélange de colorants comportant un dispositif (100-105) pour déterminer la formule du mélange de colorants à produire et comportant un organe de mélange et de dosage (200-230), commandé par ce dispositif, pour des couleurs standard maintenues en stock, installation dans le cas de laquelle le dispositif prévu pour déterminer la formule présente un ordinateur (100) qui, dans le cas d'application, détermine, à partir de données mémorisées relatives à un jeu de couleur standard prescrites et à partir de données colorimétriques entrées relatives à la couleur prescrite, les proportions des différentes couleurs standard dans le mélange de colorants à calculer, dans le cas de laquelle le calculateur (100), dans le cas d'application, procède au calcul de la formule sur la base d'un espace chromatique cartésien tridimensionnel dont trois axes de coordonnées représentent les deux coordonnées de chrominance selon la Commission Internationale de l'Éclairage CIE et une coordonnée de profondeur de couleur, dans le cas de laquelle la couleur prescrite à reproduire est définie par une coordonnée de profondeur de couleur prescrite et par deux coordonnées de chrominance prescrite, et dans le cas de laquelle le calculateur (100), dans le cas d'application, détermine, dans un plan de profondeur de couleur prescrite, défini par la coordonnée de profondeur de couleur prescrite de la position chromatique prescrite, de l'espace chromatique, les positions chromatiques étalons, exprimées par les coordonnées de chrominance, des différentes couleurs standard prescrites, segmente le plan de profondeur de couleur prescrite en surfaces triangulaires qui ne se recouvrent pas, dont les sommets sont les positions chromatiques étalons de, respectivement, trois des couleurs standard, dont les lignes de frontière représentent les positions chromatiques de tous les mélanges binaires de, respectivement, deux des trois couleurs standard définissant une surface triangulaire et dont les points intérieurs indiquent les positions chromatiques de tous les mélanges ternaires des trois couleurs standard respectivement en question, détermine les couleurs standard dans la surface triangulaire, définie par elles, desquelles se trouve la position chromatique prescrite de la couleur prescrite à reproduire, établit le mélange des trois couleurs standard ainsi déterminées dont la position chromatique coïncide, à l'intérieur d'une plage de tolérance prescrite, avec la position chromatique prescrite de la couleur prescrite à reproduire, et donne les proportions relatives des trois couleurs standard au mélange ainsi établi en tant que résultat de la détermination de la formule et/ou les mémorise.

**8.** Dispositif d'impression en plusieurs couleurs comportant un certain nombre de récipients de stockage (321-328) pour des encres d'impression standard, comportant un certain nombre de têtes d'impression (331-338) associées à ces récipients et reliées par l'intermédiaire d'organes de dosage (301-308) et comportant un organe de commande (400,300) pour les organes de dosage et les têtes d'impression, présentant un dispositif (100) de calcul de la formule qui, dans le cas d'application, sur la base de données colorimétriques qui lui sont amenées et de données mémorisées concernant les encres d'impression standard, commande les proportions des encres d'impression standard à appliquer en provenance des têtes d'impression et qui présente un ordinateur (100) qui détermine, à partir de données mémorisées relatives à un jeu de couleur standard prescrites et à partir de données colorimétriques entrées relatives à la couleur prescrite, les proportions des différentes couleurs standard dans le mélange de colorants à calculer, dans le cas de laquelle le calculateur (100), dans le cas d'application, procède au calcul de la formule sur la base d'un espace chromatique cartésien tridimensionnel dont trois axes de coordonnées représentent les deux coordonnées de chrominance selon la Commission Internationale de l'Éclairage CIE et une coordonnée de profondeur de couleur, dans le cas de laquelle la couleur prescrite à reproduire est définie par une coordonnée de profondeur de couleur prescrite et par deux coordonnées de chrominance prescrite, et dans le cas de laquelle le calculateur (100), dans le cas d'application, détermine, dans un plan de profondeur de couleur prescrite, défini par la coordonnée de profondeur de couleur prescrite de la position chromatique prescrite, de l'espace chromatique, les positions chromatiques étalons, exprimées par les coordonnées de chrominance, des différentes couleurs standard prescrites, segmente le plan de profondeur de couleur prescrite en surfaces triangulaires qui ne se recouvrent pas, dont les sommets sont les positions chromatiques étalons de, respectivement, trois des couleurs standard, dont les lignes de frontière représentent les positions chromatiques de tous les mélanges binaires de, respectivement, deux des trois couleurs standard définissant une surface triangulaire et dont les points intérieurs indiquent les positions chromatiques de tous les mélanges ternaires des trois couleurs standard respectivement en question, détermine les couleurs standard dans la surface triangulaire, définie par elles, desquelles se trouve la position chromatique prescrite de la couleur prescrite à reproduire, établit le mélange des trois couleurs standard ainsi déterminées dont la position chromatique coïncide, à l'intérieur d'une plage de tolérance prescrite, avec la position chromatique prescrite de la couleur prescrite à reproduire, et donne les proportions relatives des trois couleurs standard au mélange ainsi établi en tant que résultat de la détermination de la formule et/ou les mémorise.

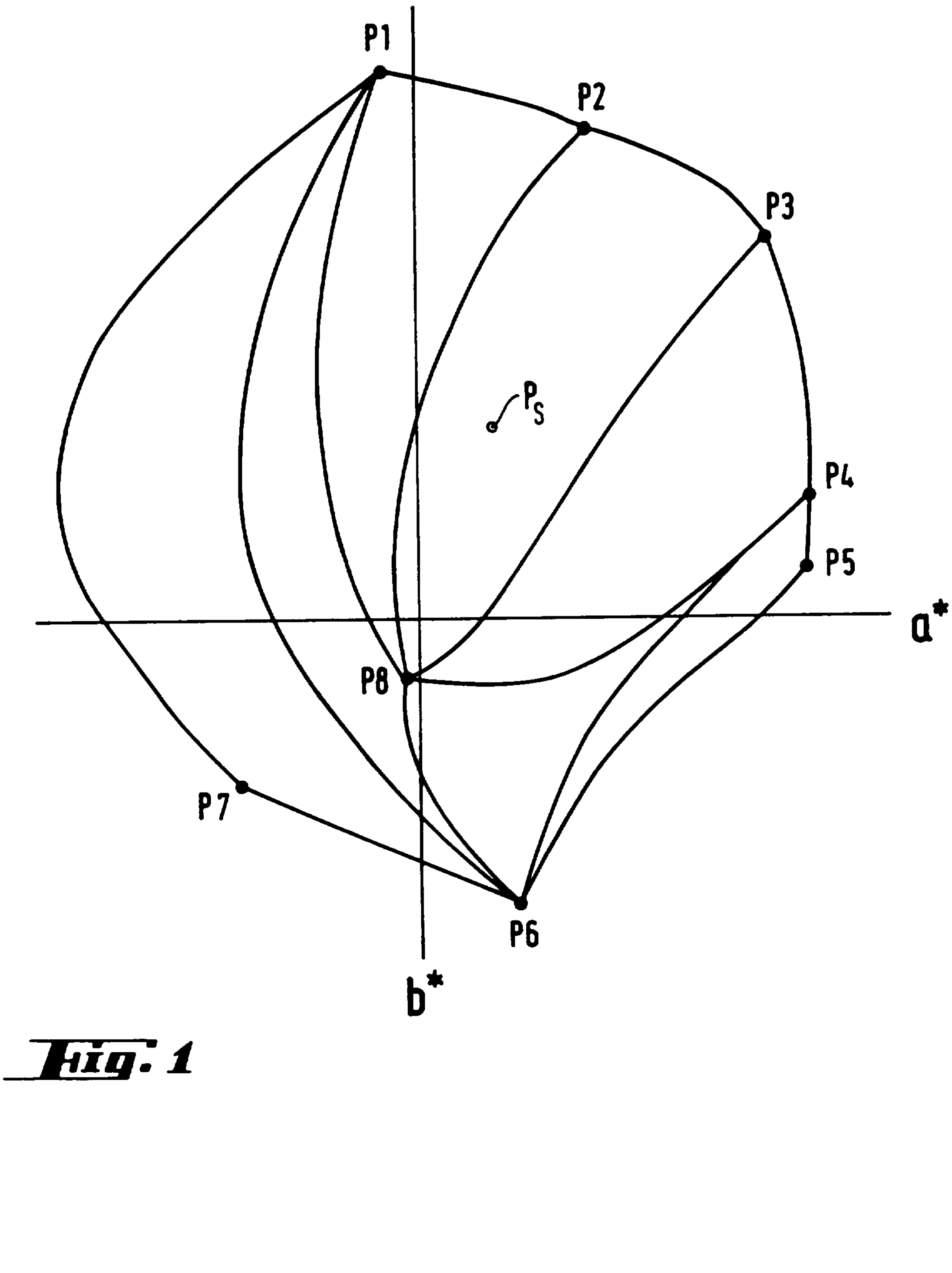


Fig. 1

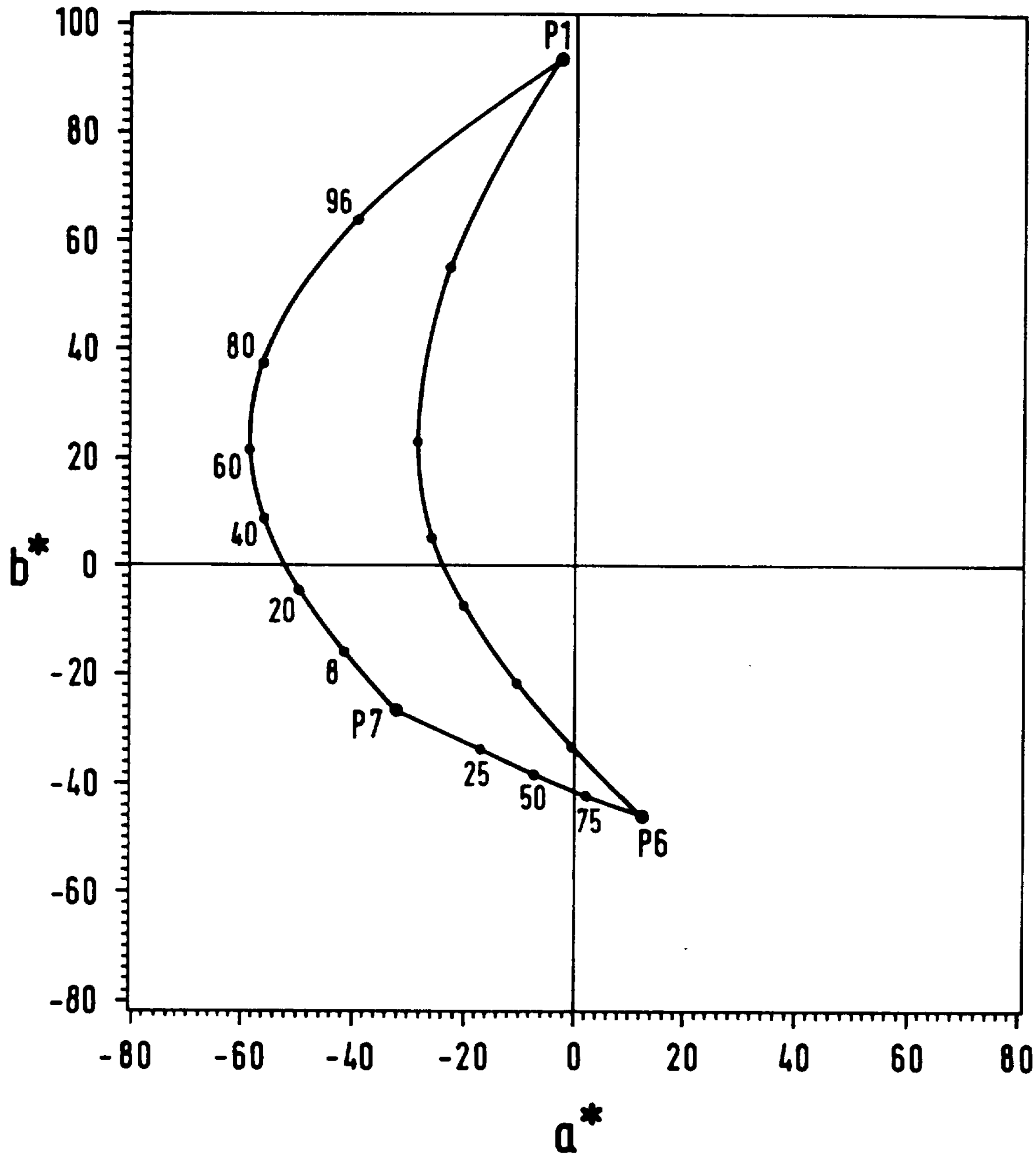
100
80
60
40
20
0
-20
-40
-60
-80
b*
-80
-60
-40
-20
0
20
40
60
80
a*
P1
96
80
60
40
20
8
P7
25
50
75
P6

Fig. 2

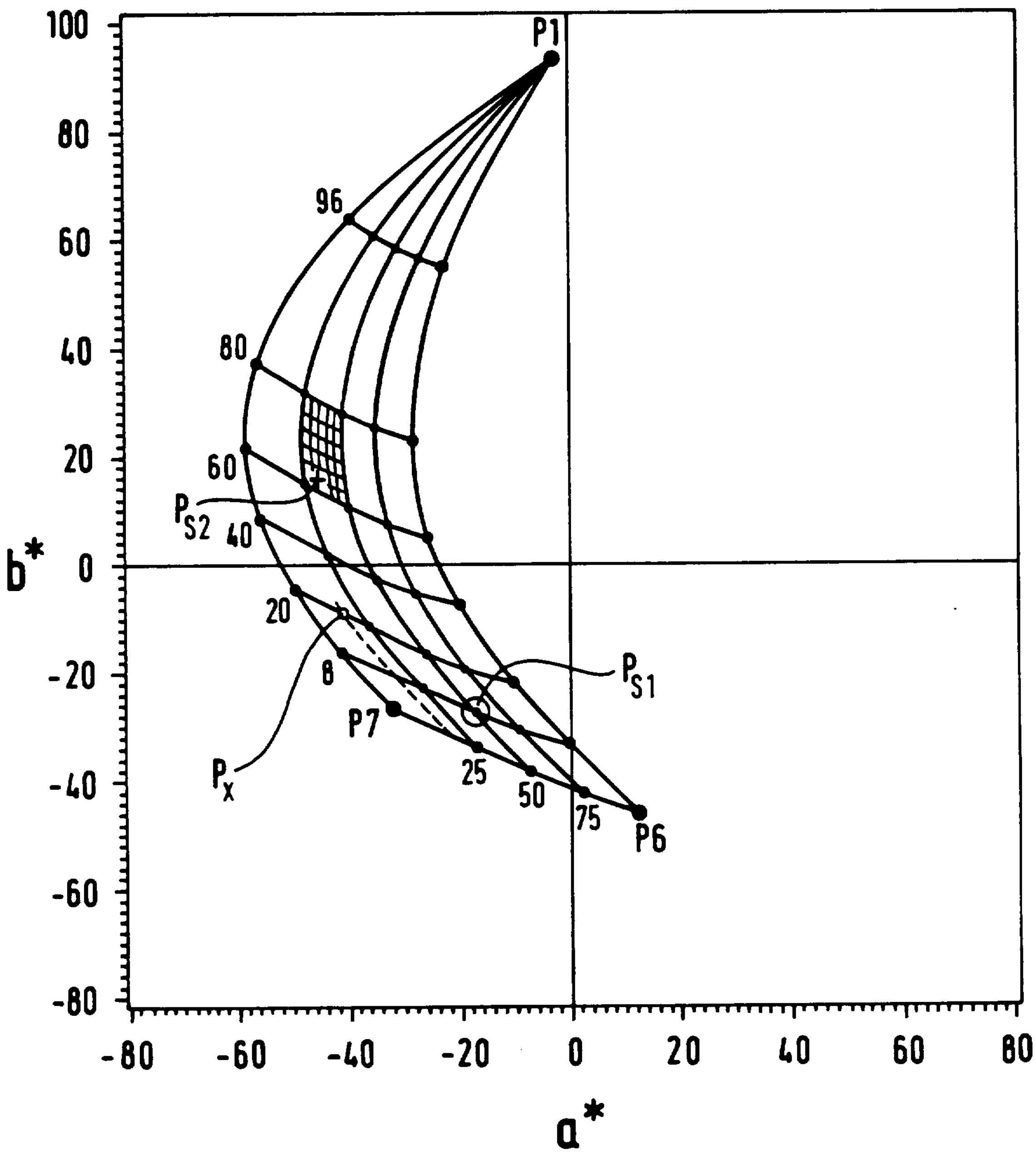
100
80
60
40
20
0
-20
-40
-60
-80
b*
-80
-60
-40
-20
0
20
40
60
80
a*
P1
96
80
60
40
20
8
P7
25
50
75
P6
$P_{S2}$
$P_{S1}$
$P_X$

Fig. 3

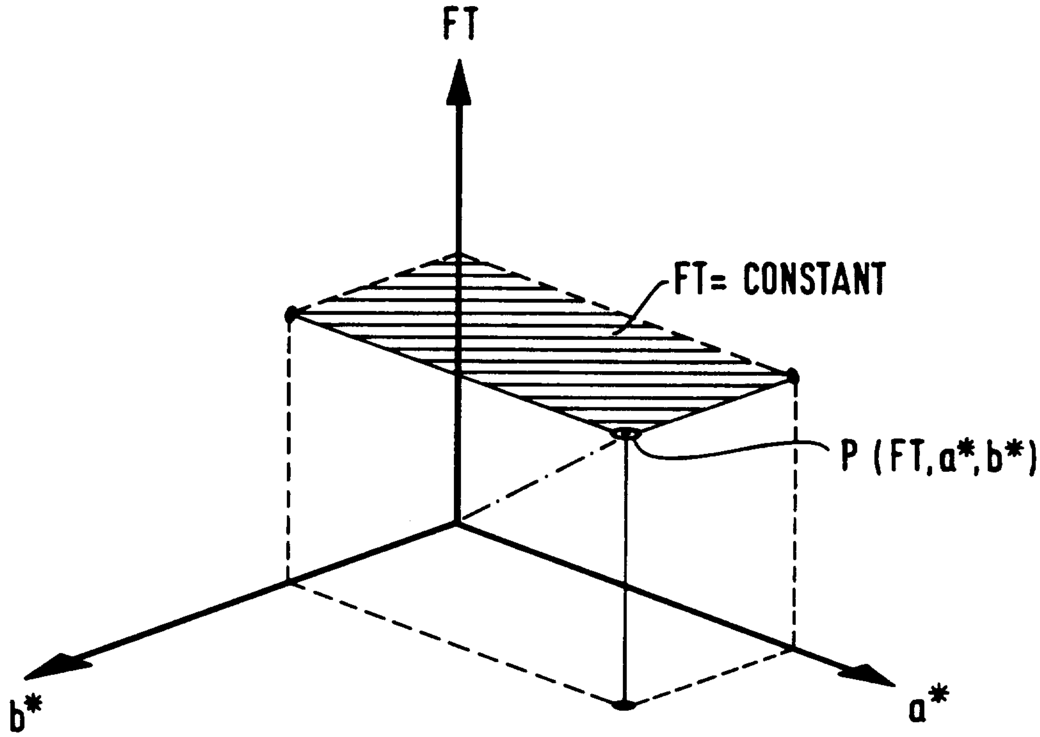


Fig. 4

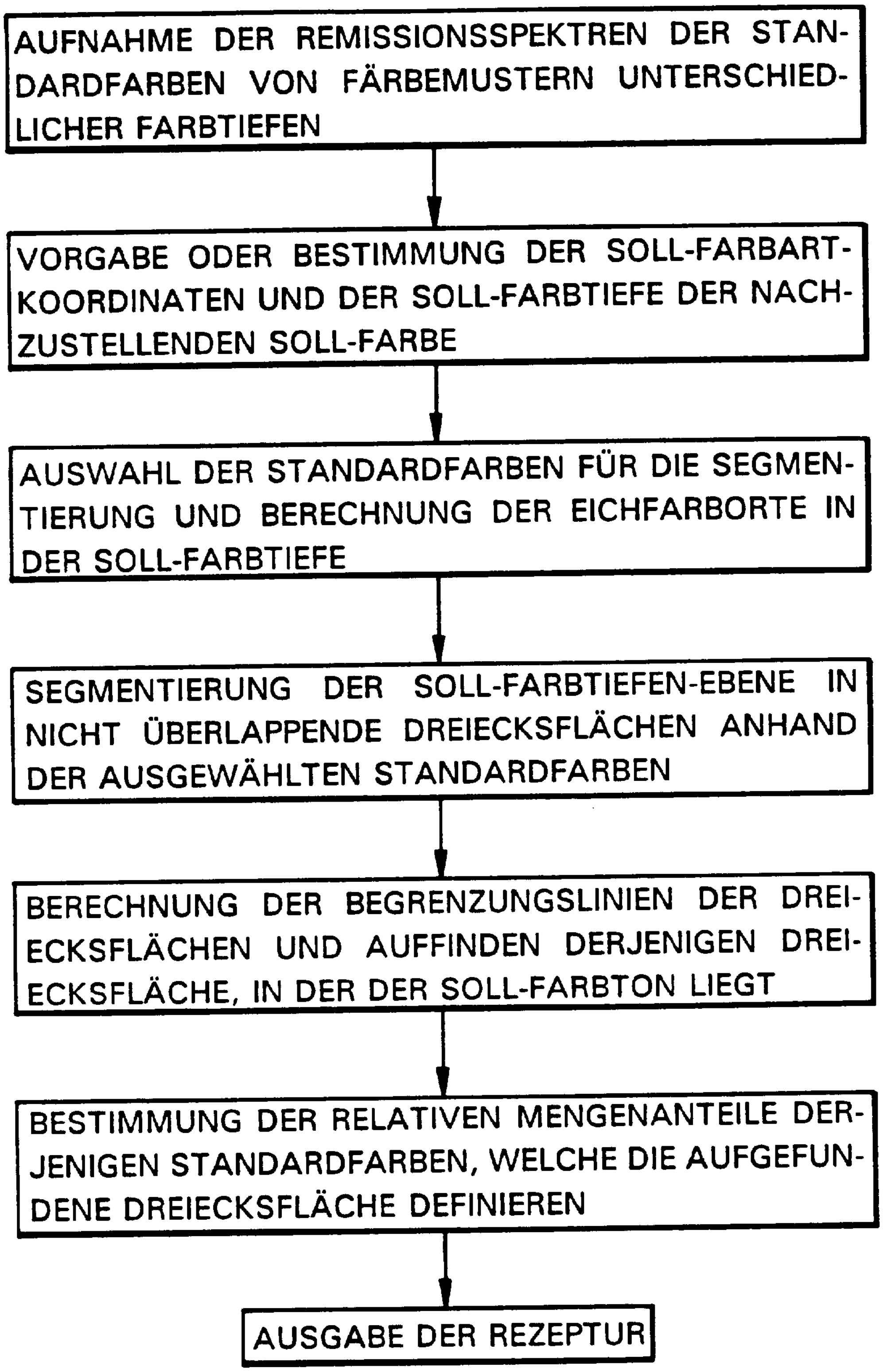
AUFNAHME DER REMISSIONSSPEKTREN DER STANDARDFARBEN VON FÄRBEMUSTERN UNTERSCHIEDLICHER FARBTIEFEN
VORGABE ODER BESTIMMUNG DER SOLL-FARBART-KOORDINATEN UND DER SOLL-FARBTIEFE DER NACHZUSTELLENDEN SOLL-FARBE
AUSWAHL DER STANDARDFARBEN FÜR DIE SEGMENTIERUNG UND BERECHNUNG DER EICHFARBORTE IN DER SOLL-FARBTIEFE
SEGMENTIERUNG DER SOLL-FARBTIEFEN-EBENE IN NICHT ÜBERLAPPENDE DREIECKSFLÄCHEN ANHAND DER AUSGEWÄHLTEN STANDARDFARBEN
BERECHNUNG DER BEGRENZUNGSLINIEN DER DREIECKSFLÄCHEN UND AUFFINDEN DERJENIGEN DREIECKSFLÄCHE, IN DER DER SOLL-FARBTON LIEGT
BESTIMMUNG DER RELATIVEN MENGENANTEILE DERJENIGEN STANDARDFARBEN, WELCHE DIE AUFGEFUNDENE DREIECKSFLÄCHE DEFINIEREN
AUSGABE DER REZEPTUR

Fig. 5

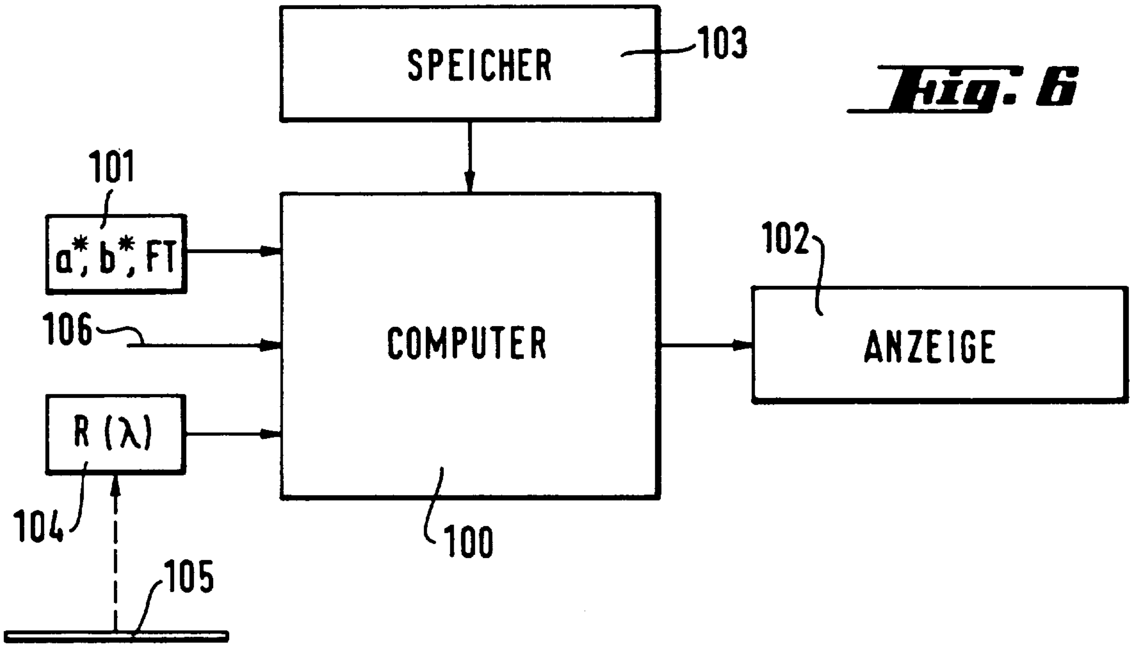
SPEICHER
103
101
a*, b*, FT
106
COMPUTER
102
ANZEIGE
R (λ)
104
100
105

Fig. 6

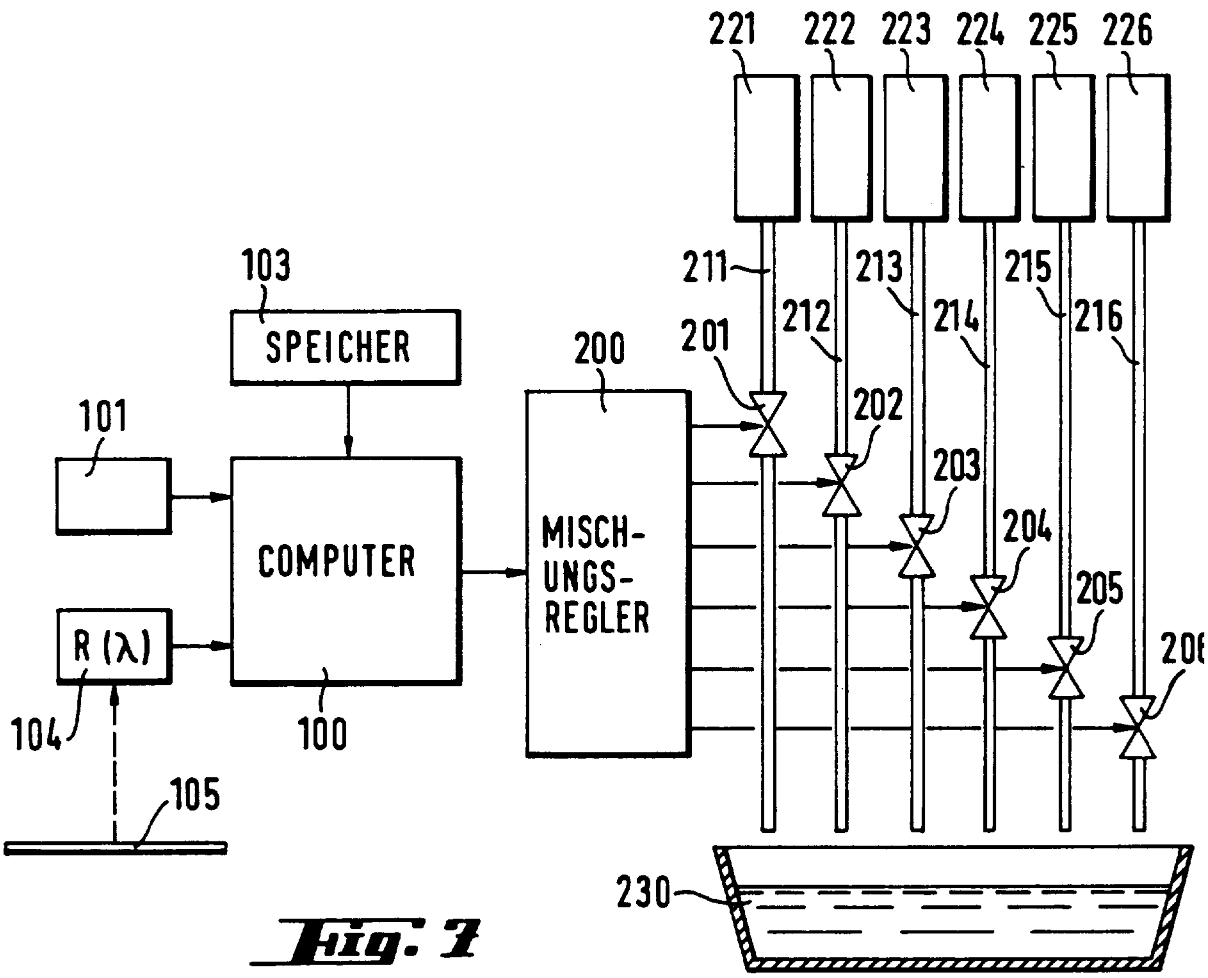
221
222
223
224
225
226
211
213
215
103
212
214
216
SPEICHER
200
201
101
202
203
COMPUTER
MISCH-
UNGS-
REGLER
204
R (λ)
205
104
100
105
230

Fig. 7

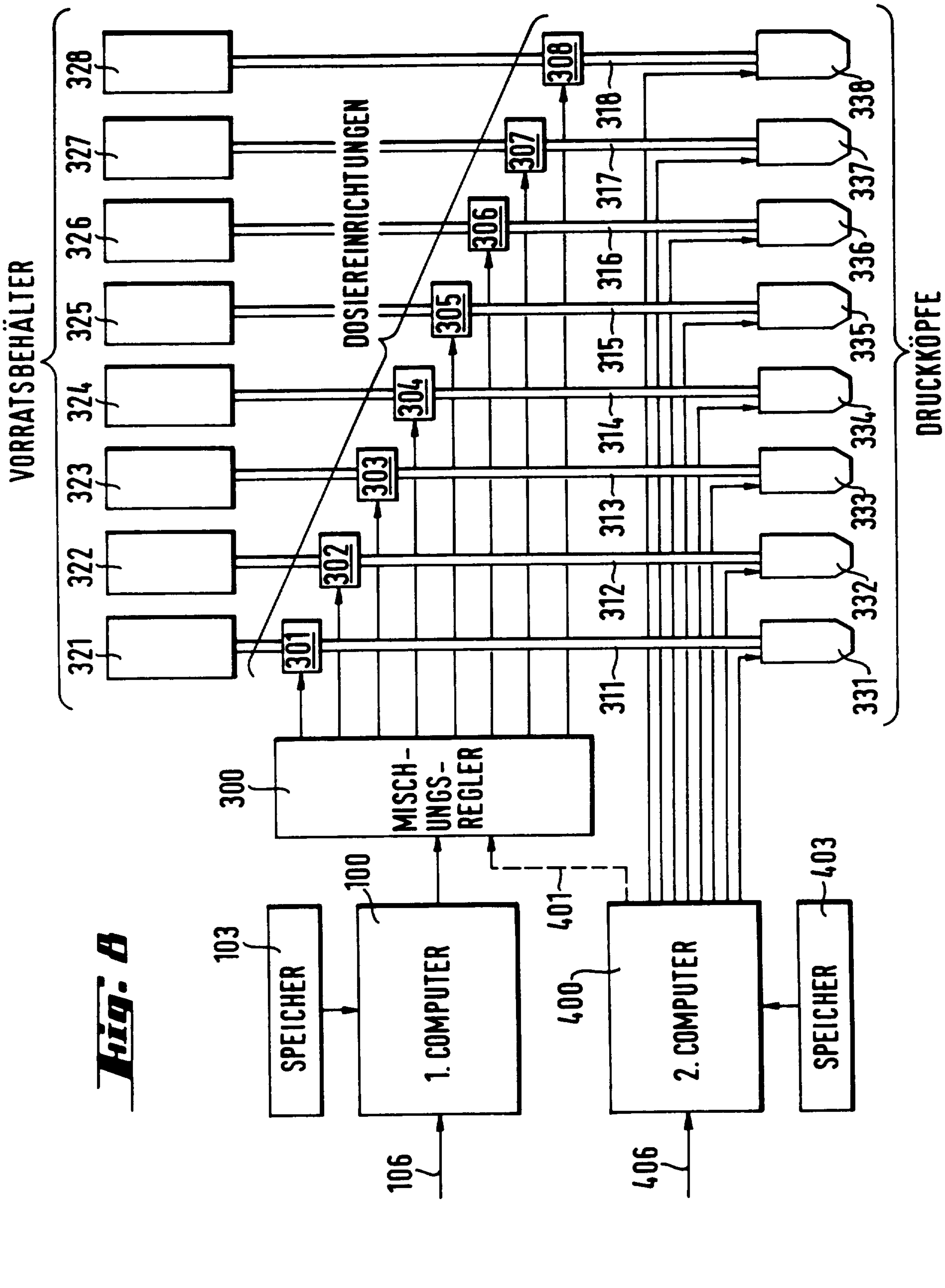
VORRATSBEHÄLTER
321
322
323
324
325
326
327
328
DOSIEREINRICHTUNGEN
301
302
303
304
305
306
307
308
311
312
313
314
315
316
317
318
331
332
333
334
335
336
337
338
DRUCKKÖPFE
300
MISCH-
UNGS-
REGLER
103
SPEICHER
100
1. COMPUTER
106
401
400
2. COMPUTER
403
SPEICHER
406

Fig. 8